# EUROPEAN PATENT APPLICATION

(11) **EP 4 804 156 A1**
(43) Date of publication of application: **09.09.2026**
(21) Application number: 26160341.9
(22) Date of filing: 24.02.2026
(51) Int. Cl.: G07F 17/32

(54) **INTEGRABLE MODULAR LOTTERY TERMINAL**

(30) Priority: 04.03.2025 US 202519069623; 13.09.2025 US 202563881299 P; 10.02.2026 US 202619535042
(71) Applicant: Brightstar Global Solutions Corporation, Providence, RI 02903 (US)
(72) Inventor: HULTZMAN, Scott, Putnam, 06260 (US); ANAGNOSTOS, David, Warren, 02885 (US)
(74) Representative: Studio Torta S.p.A.

(57) **Abstract**

An integrable modular lottery terminal including a CPU unit, a display device, and a reader configured to be positioned in various different configurations on a support structure for the integrable modular lottery terminal.

## Description

### BACKGROUND

The present disclosure relates to an integrable modular lottery terminal.

Draw lottery games are widely employed. For a draw lottery ticket for a draw lottery game, a player may select the player's numbers or may have the system randomly select the player's numbers (which is often referred to as a quick pick). In various instances, to purchase a draw lottery ticket in person with player selected numbers, a player may fill out a paper lottery ticket play slip with the player selected numbers and provide that lottery ticket play slip to an operator of a lottery terminal. The operator scans the paper lottery ticket play slip via a lottery ticket play slip reader that is part of a lottery terminal to determine the player's numbers. The lottery terminal uses the scanned data to generate a draw lottery ticket for the player and prints the draw lottery ticket. The operator then provides the draw lottery ticket to the player. In various other instances, to purchase a draw lottery ticket in person with player selected numbers, a player use an electronic device (such as the player's mobile telephone) to create an electronic lottery ticket play slip associated with the player selected numbers and display that electronic lottery ticket play slip to enable an operator of the lottery terminal to scan that electronic lottery ticket play slip via a lottery ticket play slip reader that is part of the lottery terminal to determine the player's numbers. The lottery terminal uses the scanned data to generate a draw lottery ticket for the player and prints the draw lottery ticket. The operator then provides the draw lottery ticket to the player.

Draw lottery tickets may be sold in variety of different manners using a variety of different systems such as via lottery terminals at a various different locations such as different retail location. The spaces for lottery terminals at different retail locations vary and can be very limited at certain retail locations.

### BRIEF SUMMARY

In various embodiments, the present disclosure relates to an integrable modular lottery terminal including a CPU unit, a display device including a display device housing and a connector arm extending from the display device housing, and a reader including a base, a camera unit supporter, and a camera unit. The camera unit supporter include a housing that houses the CPU unit. The camera unit includes a camera housing that houses a camera. The camera unit includes a first connector arm receiver configured to receive and securely hold the connector arm of the display device such that the display device faces a first direction.

In various other embodiments, the present disclosure relates to an integrable modular lottery terminal including a CPU unit, a display device including a display device housing and a connector arm extending from the display device housing, and a reader including a base, a camera unit supporter, and a camera unit. The camera unit includes a camera housing that houses a camera. The camera unit includes a first connector arm receiver extending inwardly from a first side wall of the camera unit, a second connector arm receiver extending inwardly from a second side wall of the camera unit, and a third connector arm receiver extending inwardly from a third side wall of the camera unit, each of the first, second, and third connector arm receivers configured to receive and securely hold the connector arm of the display device.

In various other embodiments, the present disclosure relates to an integrable modular lottery terminal including a CPU unit, a display device including a display device housing and a connector arm extending from the display device housing, wherein the connector arm includes a connector arm support including a connector arm support base connected to a rear wall of the display device housing, spaced-apart mounting members connected to the connector arm support base, and an insertion member pivotably supported by the mounting members, and a reader including a base supporting a camera unit supporter that supports a camera unit. The camera unit includes a camera housing that houses a camera. The camera unit includes a connector arm receiver configured to receive and securely hold the connector arm of the display device such that the display device faces a first direction.

Additional features are described in, and will be apparent from, the following Detailed Description and the figures.

### BRIEF DESCRIPTION OF THE SEVERAL VIEWS OF THE DRAWINGS

Figure 1 is a front perspective view of an integrable modular lottery terminal including a CPU unit, a display device, a display device stand, and a lottery ticket play slip reader in accordance with one example embodiment of the present disclosure. The CPU unit, the display device, the display device stand, and the lottery ticket play slip reader of the integrable modular lottery terminal are separately shown in Figure 1 and are integrable in different configurations.
Figure 2A is a front perspective view of the CPU unit of the integrable modular lottery terminal of Figure 1.
Figure 2B is a front view of the CPU unit of the integrable modular lottery terminal of Figure 1.
Figure 2C is a left side view of the CPU unit of the integrable modular lottery terminal of Figure 1.
Figure 2D is a right-side view of the CPU unit of the integrable modular lottery terminal of Figure 1.
Figure 2E is a top view of the CPU unit of the integrable modular lottery terminal of Figure 1.
Figure 2F is a rear view of the CPU unit of the integrable modular lottery terminal of Figure 1.
Figure 2G is a bottom view of the CPU unit of the integrable modular lottery terminal of Figure 1.
Figure 3A is a front perspective view of the display device of the integrable modular lottery terminal of Figure 1.
Figure 3B is a front view of the display device of the integrable modular lottery terminal of Figure 1.
Figure 3C is a left side view of the display device of the integrable modular lottery terminal of Figure 1.
Figure 3D is a right-side view of the display device of the integrable modular lottery terminal of Figure 1.
Figure 3E is a top view of the display device of the integrable modular lottery terminal of Figure 1.
Figure 3F is a rear view of the display device of the integrable modular lottery terminal of Figure 1.
Figure 3G is a bottom view of the display device of the integrable modular lottery terminal of Figure 1.
Figure 4A is a front perspective view of the display device stand of the integrable modular lottery terminal of Figure 1.
Figure 4B is a front view of the display device stand of the integrable modular lottery terminal of Figure 1.
Figure 4C is a left side view of the display device stand of the integrable modular lottery terminal of Figure 1.
Figure 4D is a right-side view of the display device stand of the integrable modular lottery terminal of Figure 1.
Figure 4E is a top view of the display device stand of the integrable modular lottery terminal of Figure 1.
Figure 4F is a rear view of the display device stand of the integrable modular lottery terminal of Figure 1.
Figure 4G is a bottom view of the display device stand of the integrable modular lottery terminal of Figure 1.
Figure 5A is a front perspective view of the lottery ticket play slip reader of the integrable modular lottery terminal of Figure 1.
Figure 5B is a front view of the lottery ticket play slip reader of the integrable modular lottery terminal of Figure 1.
Figure 5C is a left side view of the lottery ticket play slip reader of the integrable modular lottery terminal of Figure 1.
Figure 5D is a right-side view of the lottery ticket play slip reader of the integrable modular lottery terminal of Figure 1.
Figure 5E is a top view of the lottery ticket play slip reader of the integrable modular lottery terminal of Figure 1.
Figure 5F is a rear view of the lottery ticket play slip reader of the integrable modular lottery terminal of Figure 1.
Figure 5G is a bottom view of the lottery ticket play slip reader of the integrable modular lottery terminal of Figure 1.
Figure 6A is a front perspective view of the CPU unit, the display device, the display device stand, and the lottery ticket play slip reader of the integrable modular lottery terminal of Figure 1 arranged in a second configuration.
Figure 6B is a front perspective view of the CPU unit, the display device, and the lottery ticket play slip reader of the integrable modular lottery terminal of Figure 1 arranged in a third configuration.
Figure 6C is a front perspective view of the CPU unit, the display device, and the lottery ticket play slip reader of the integrable modular lottery terminal of Figure 1 arranged in a fourth configuration.
Figure 7 is a front perspective view of the CPU unit, the display device, and the lottery ticket play slip reader of an integrable modular lottery terminal in accordance with another example embodiment of the present disclosure.
Figure 8 is a front perspective view of the CPU unit, the display device, and the lottery ticket play slip reader of an integrable modular lottery terminal in accordance with another example embodiment of the present disclosure.
Figure 9 is a front perspective view of the CPU unit, the display device, and the lottery ticket play slip reader of an integrable modular lottery terminal in accordance with another example embodiment of the present disclosure.
Figure 10 is a front perspective view of the CPU unit, the display device, and the lottery ticket play slip reader of an integrable modular lottery terminal in accordance with another example embodiment of the present disclosure.
Figure 11 is a front perspective view of the CPU unit, the display device, and the lottery ticket play slip reader of an integrable modular lottery terminal in accordance with another example embodiment of the present disclosure.
Figures 12, 13, 14, 15, 16, 17, 18, 19, 20, 21, 22, and 23 are different perspective views of the CPU unit, the display device, and the lottery ticket play slip reader of an integrable modular lottery terminal in accordance with another example embodiment of the present disclosure.
Figure 24A is a first top perspective partially exploded view of an integrable modular lottery terminal including a reader, a CPU unit, and a display device in accordance with another example embodiment of the present disclosure.
Figure 24B is a second top perspective partially exploded view of the integrable modular lottery terminal of Figure 24A.
Figure 24BB is an enlarged fragmentary third top perspective partially exploded view of the integrable modular lottery terminal of Figure 24A.
Figure 24C is a fourth top perspective partially exploded view of the integrable modular lottery terminal of Figure 24A.
Figure 24CC is an enlarged fragmentary fifth top perspective partially exploded view of the integrable modular lottery terminal of Figure 24A.
Figure 24D is a sixth top perspective partially exploded view of the integrable modular lottery terminal of Figure 24A.
Figure 24E is a seventh top perspective partially exploded view of the integrable modular lottery terminal of Figure 24A.
Figure 24F is an eighth top perspective partially exploded view of the integrable modular lottery terminal of Figure 24A.
Figures 24G, 24H, 241, and 24J are different perspective views of the integrable modular lottery terminal of Figure 24A shown in a first configuration where the display device is connected to the reader in a first position.
Figures 24K, 24L, 24M, 24N, 24O, and 24P are different elevational views of the integrable modular lottery terminal of Figure 24A shown in the first configuration where the display device is connected to the reader in the first position.
Figure 25 is a perspective view of the integrable modular lottery terminal of Figure 24A shown in a second configuration where the display device is connected to the reader in a second position.
Figure 26 is a perspective view of the integrable modular lottery terminal of Figure 24A shown in a third configuration where the display device is connected to the reader in a third position.
Figure 27 is a perspective view of the integrable modular lottery terminal of Figure 24A shown with two display devices in a fourth configuration where the first display device is connected to the reader in the first position and the second display device is connected to the reader in the second position.
Figure 28 is a perspective view of the integrable modular lottery terminal of Figure 24A shown in a fifth configuration where the display device is connected to the reader in the second position, and at a vertically different position relative to the reader.
Figure 29 is a perspective view of the integrable modular lottery terminal of Figure 24A shown in a sixth configuration where the display device is connected to the reader in the first position, and at a first vertically lower position relative to the reader.
Figure 30 is a perspective view of the integrable modular lottery terminal of Figure 24A shown in a seventh configuration where the display device is connected to the reader in the second position, and at a second vertically lower position relative to the reader.
Figure 31 is a perspective view of the integrable modular lottery terminal of Figure 24A shown in an eighth configuration where the display device is connected to the reader in the third position, and at a second vertically lower position relative to the reader.
Figure 32 is a perspective view of the integrable modular lottery terminal of Figure 24A shown in a ninth configuration where an alternative display device is connected to the reader in a first portrait position.
Figure 33 is a perspective view of the integrable modular lottery terminal of Figure 24A shown in a tenth configuration where the alternative display device is connected to the reader in a second portrait position.
Figure 34 is a perspective view of the integrable modular lottery terminal of Figure 24A shown in an eleventh configuration where the alternative display device is connected to the reader in a third portrait position.
Figure 35 is a perspective view of the integrable modular lottery terminal of Figure 24A shown in a twelfth configuration where the alternative display device is connected to the reader in the first portrait position, and at a vertically lower position relative to the reader.
Figure 36 is a perspective view of the integrable modular lottery terminal of Figure 24A shown in a thirteenth configuration where the alternative display device is connected to the reader in the second portrait position, and at a vertically lower position relative to the reader.
Figure 37 is a perspective view of the integrable modular lottery terminal of Figure 24A shown in a fourteenth configuration where the alternative display device is connected to the reader in the third portrait position, and at a vertically lower position relative to the reader.

### DETAILED DESCRIPTION

While the systems, devices, and methods described herein may be embodied in various forms, the drawings show, and the specification describes certain exemplary and non-limiting embodiments. Not all components shown in the drawings and described in the specification may be required, and certain implementations may include additional, different, or fewer components. Variations in the arrangement and type of the components; the shapes, sizes, and materials of the components; and the manners of connections of the components may be made without departing from the spirit or scope of the claims. Unless otherwise indicated, any directions referred to in the specification reflect the orientations of the components shown in the corresponding drawings and do not limit the scope of the present disclosure. Further, terms that refer to mounting methods, such as mounted, connected, etc., are not intended to be limited to direct mounting methods but should be interpreted broadly to include indirect and operably mounted, connected, and like mounting methods. This specification is intended to be taken as a whole and interpreted in accordance with the principles of the present disclosure and as understood by one of ordinary skill in the art.

In various embodiments, the present disclosure relates to an integrable modular lottery terminal including a CPU unit, a display device, a display device stand, and a lottery ticket play slip reader. The CPU unit, the display device, the display device stand, and the lottery ticket play slip reader are structured to be employed and integrated in any one of multiple different configurations, where the configurations are suited for the space available on a support (such as retail location countertop).

In various embodiments, the CPU unit, the display device, and the reader are structured to be employed and integrated in other different configurations without the display device stand wherein the configuration can be based on the operator preference, the space available on a support for the integrable modular lottery terminal (such as on a retail location countertop), and/or one or more other factors.

In various embodiments, the present disclosure relates to an integrable modular lottery terminal including a CPU unit positioned in the reader and one or more display devices attachable to the reader in any one of three different positions. The reader housing the CPU unit and each the display device(s) are structured to be employed and integrated in any one of multiple different configurations such as but not limited to the manners described herein.

### Integrable Modular Lottery Terminal - First Example Embodiment

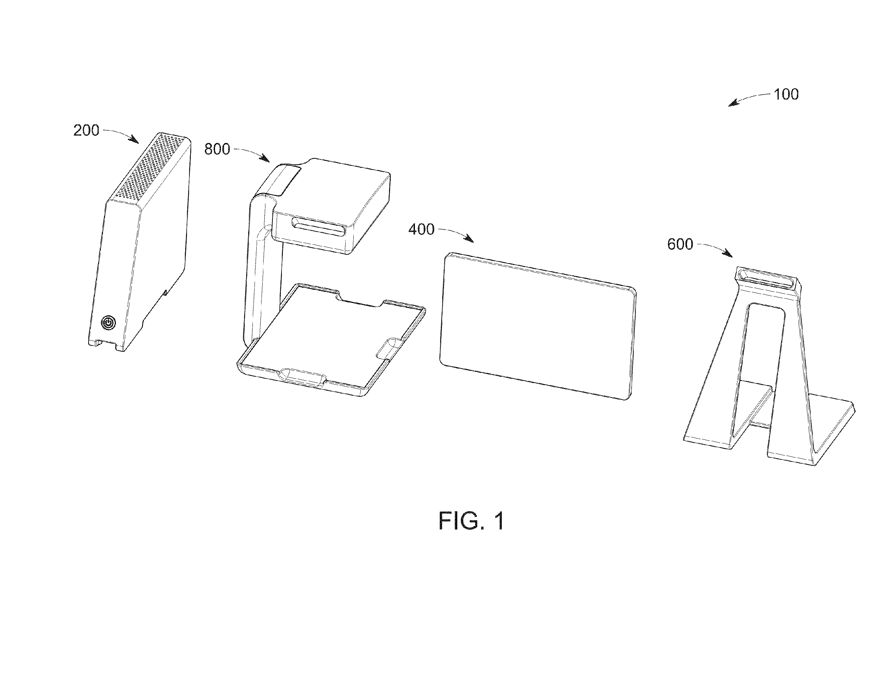

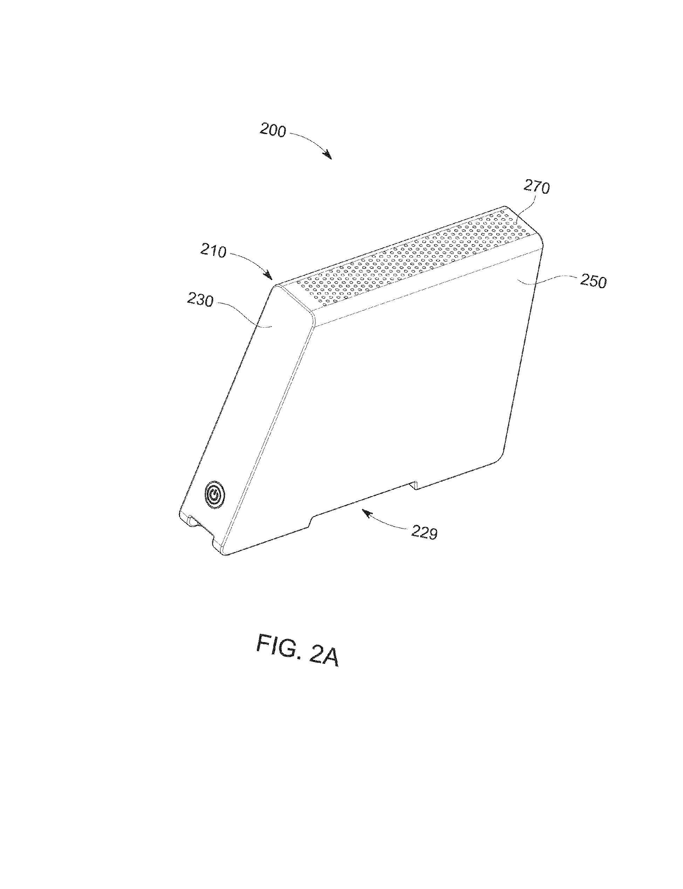

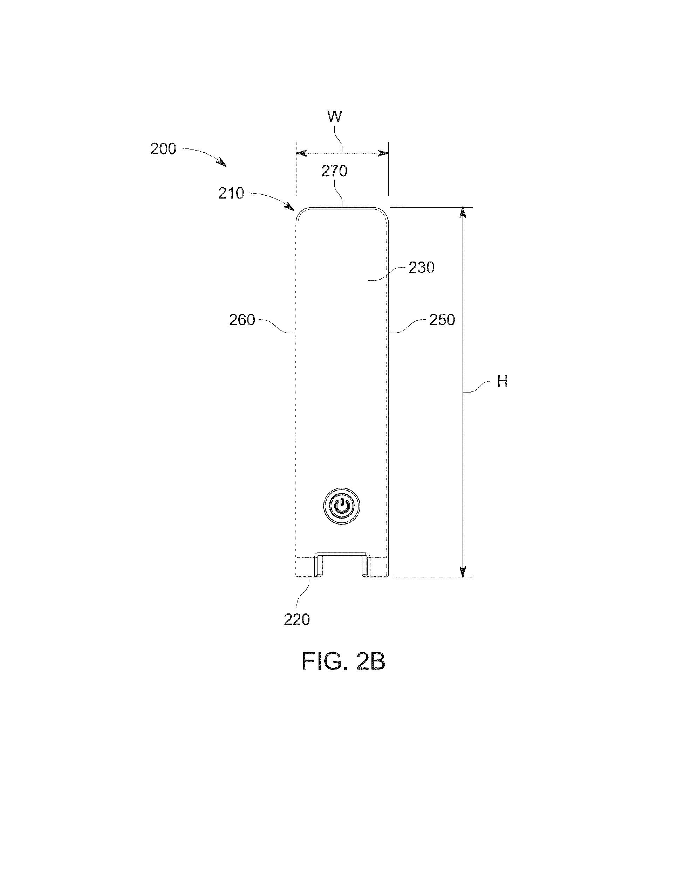

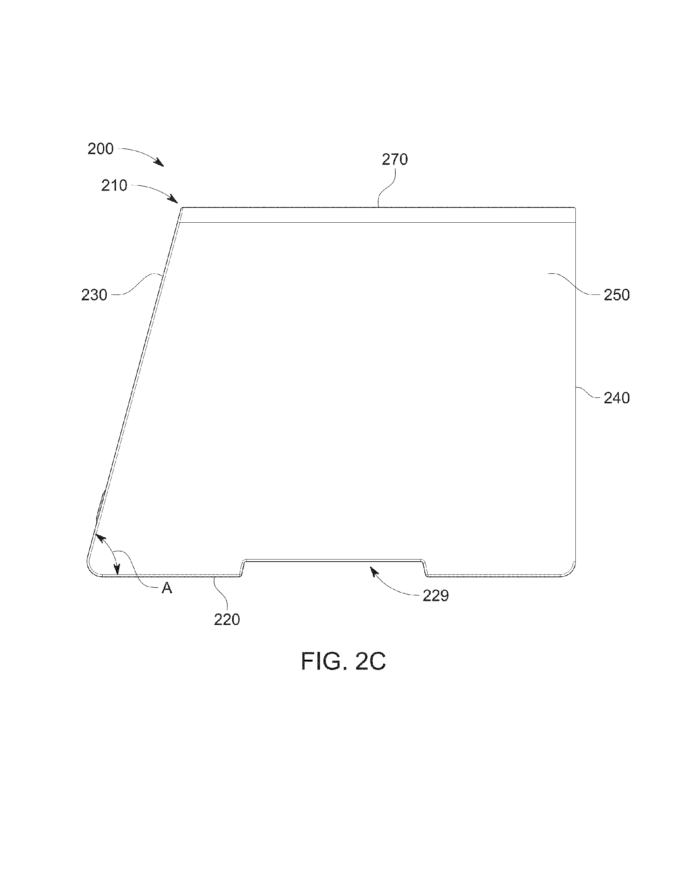

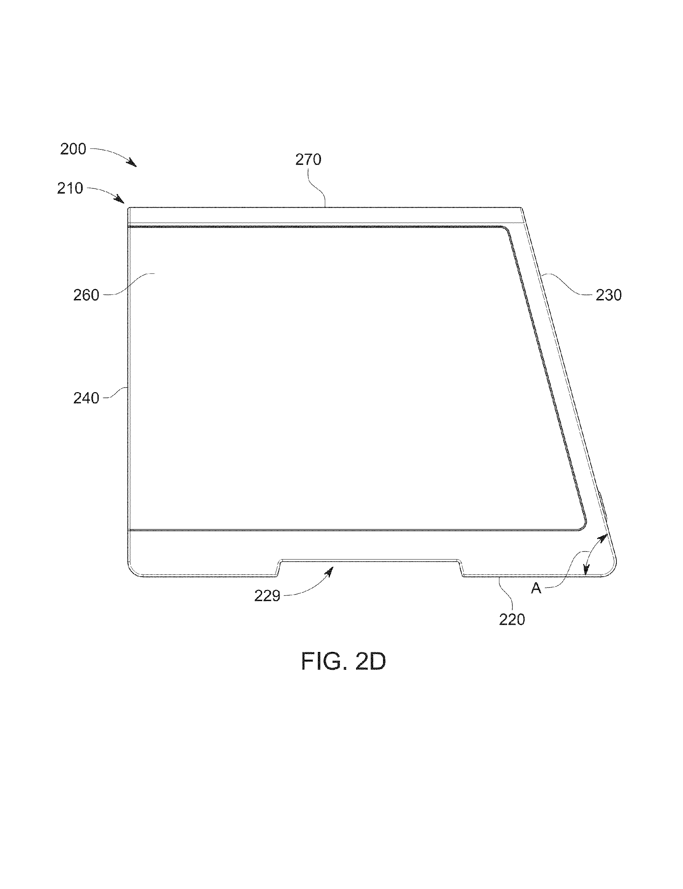

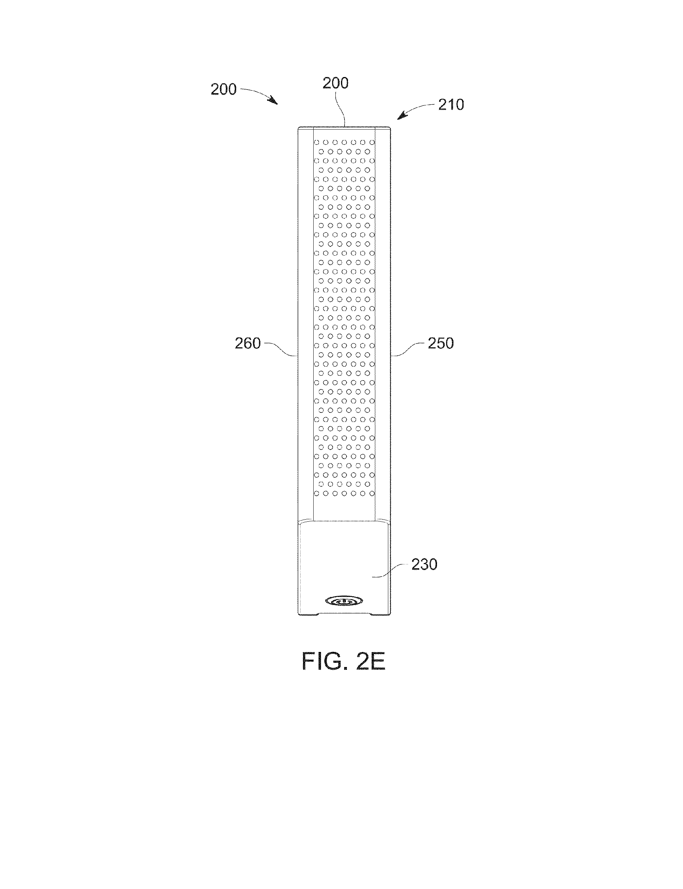

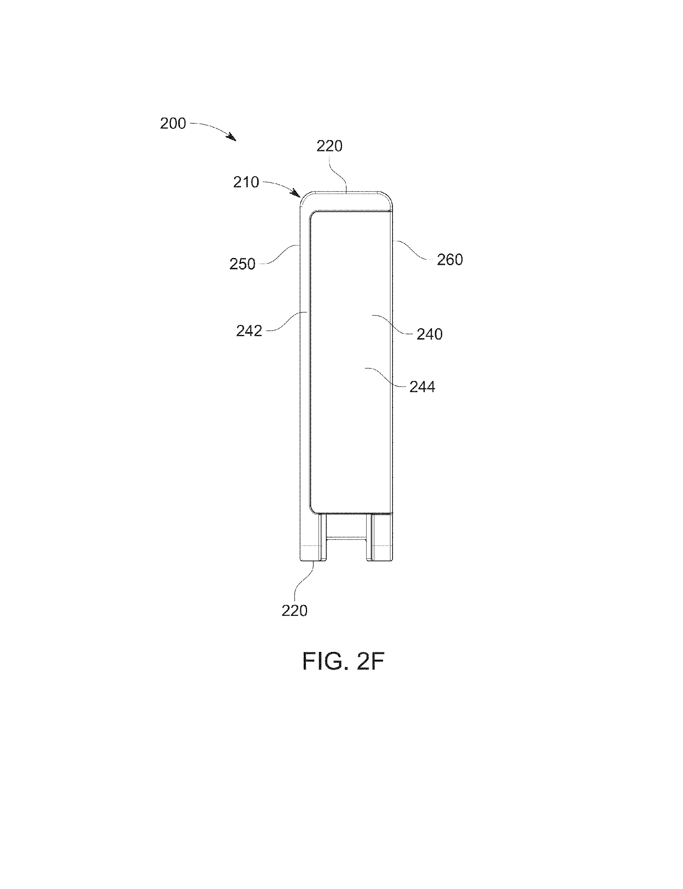

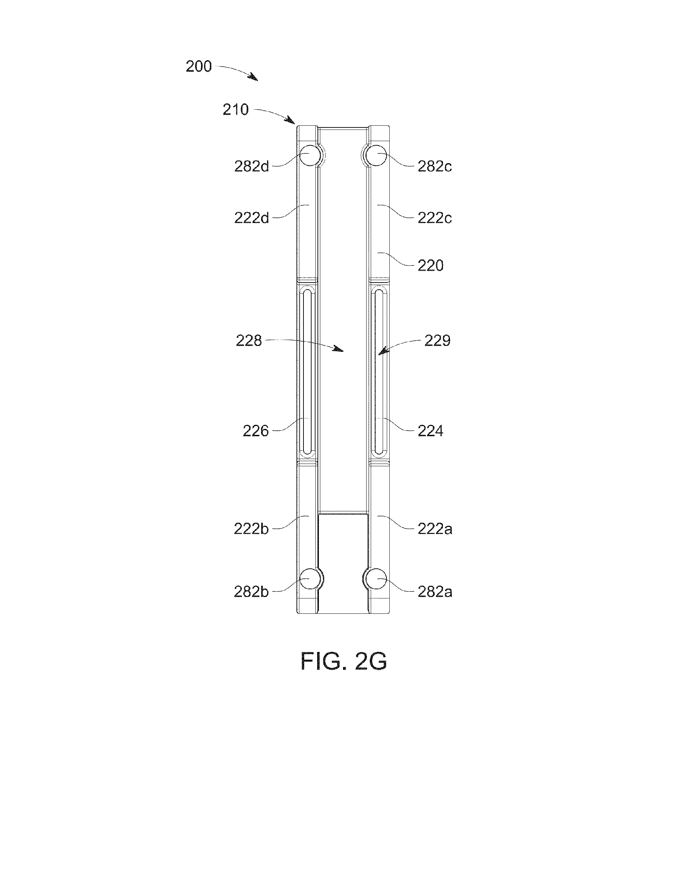

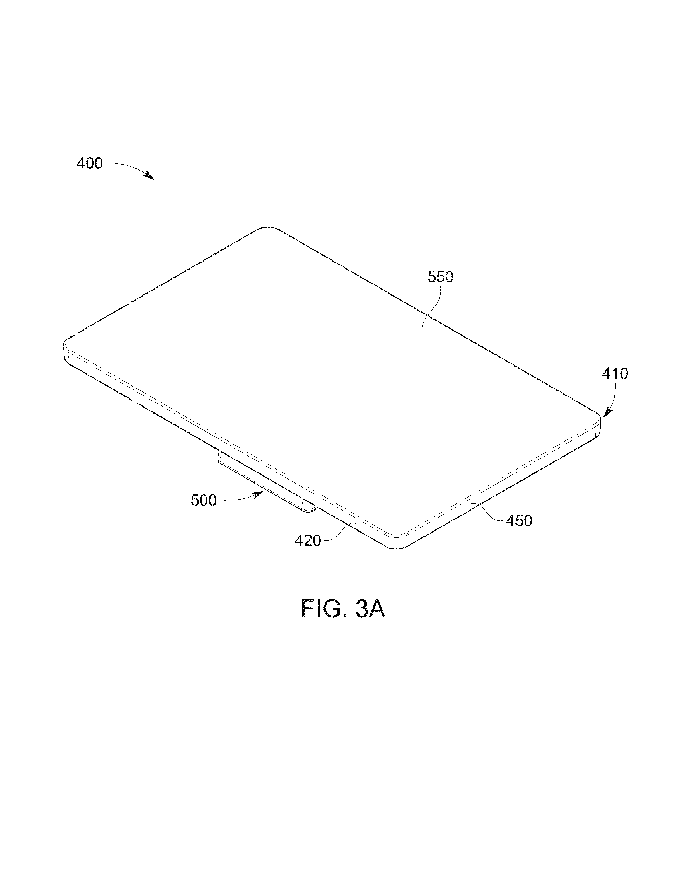

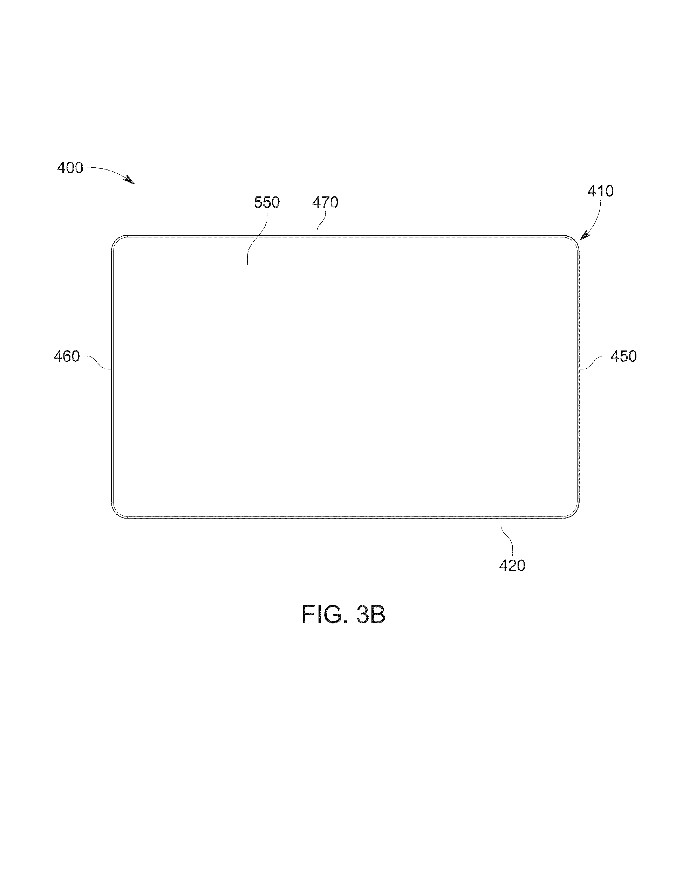

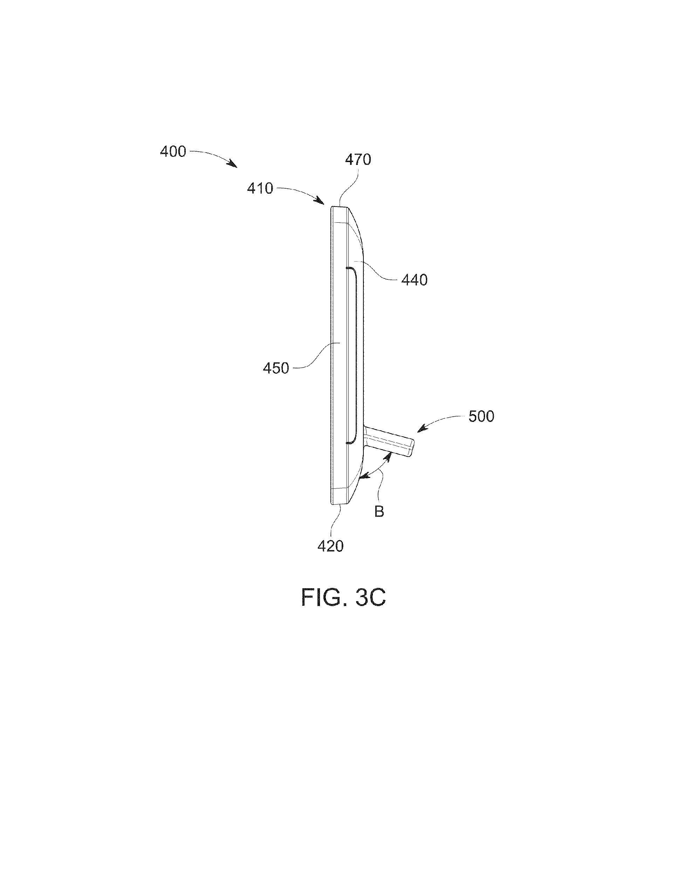

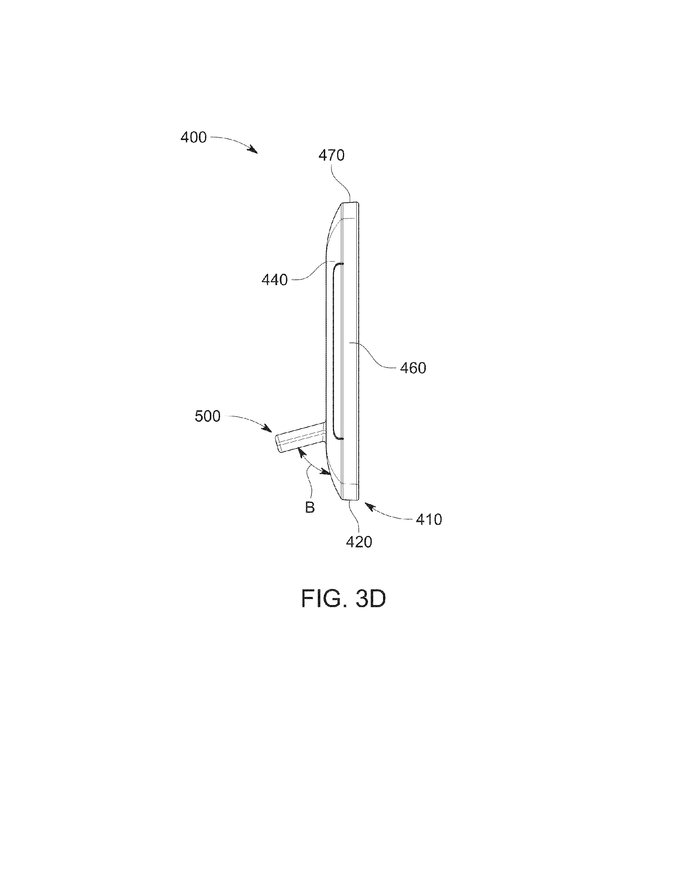

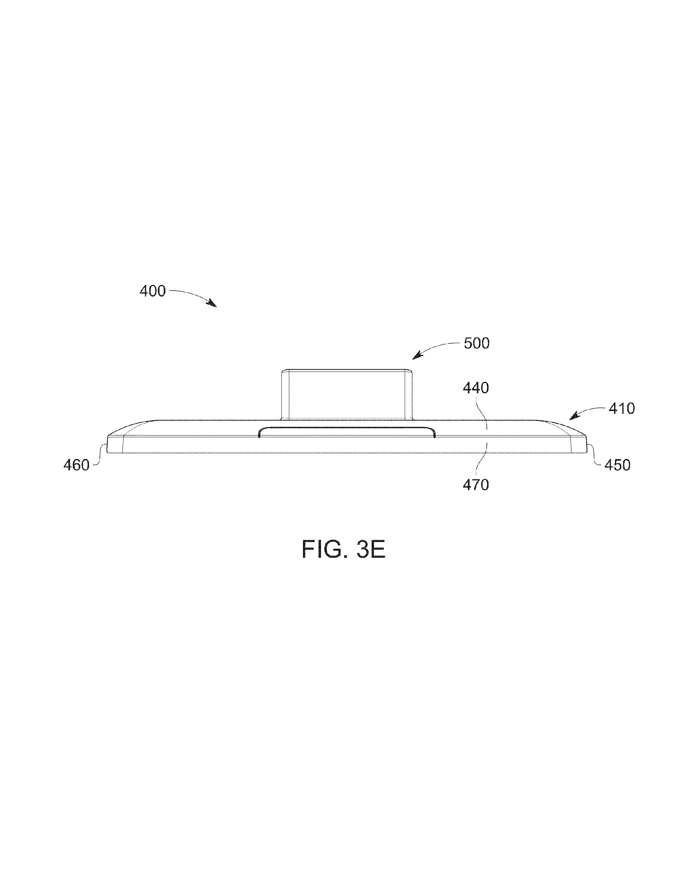

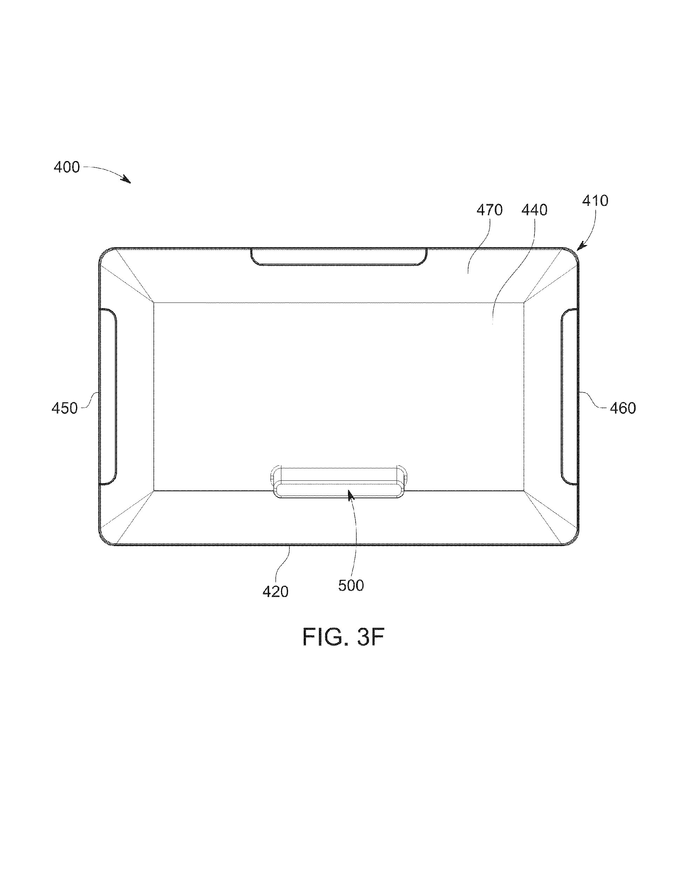

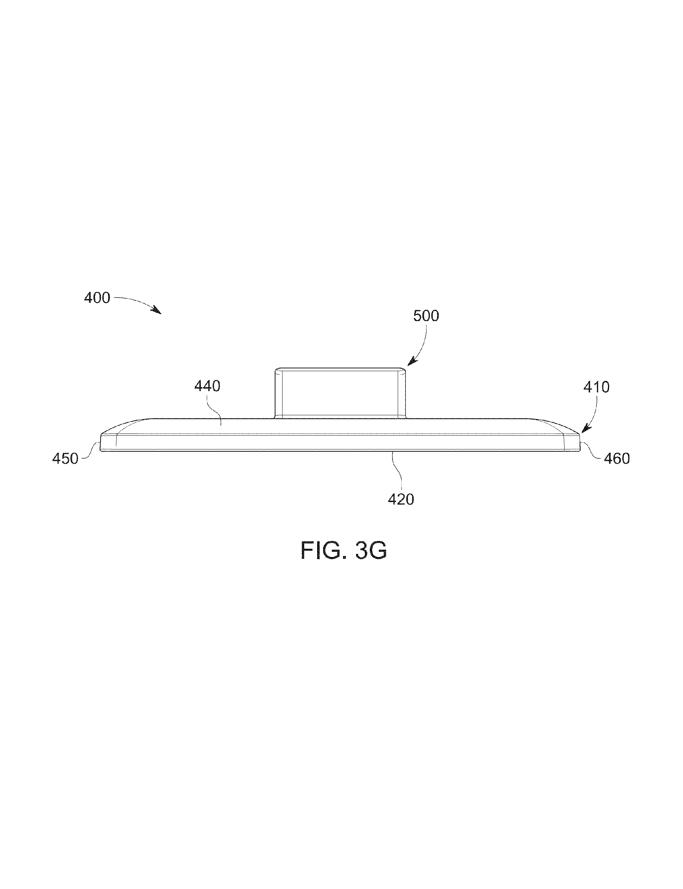

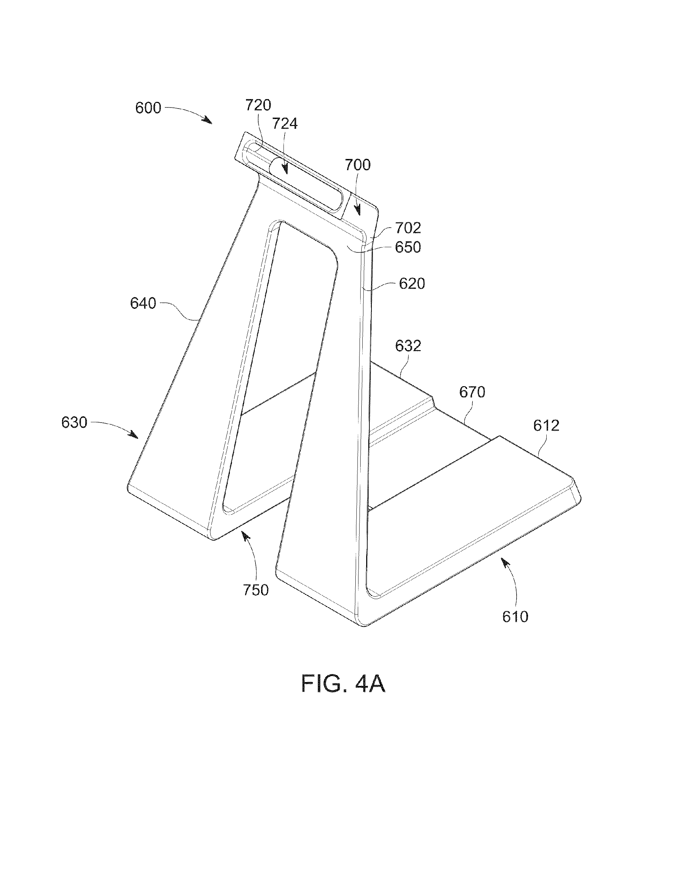

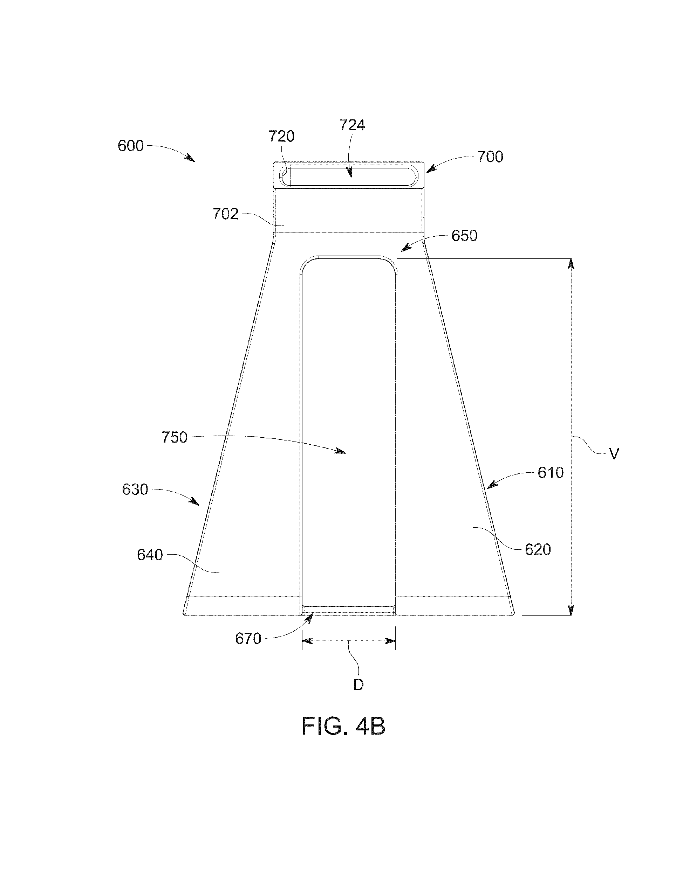

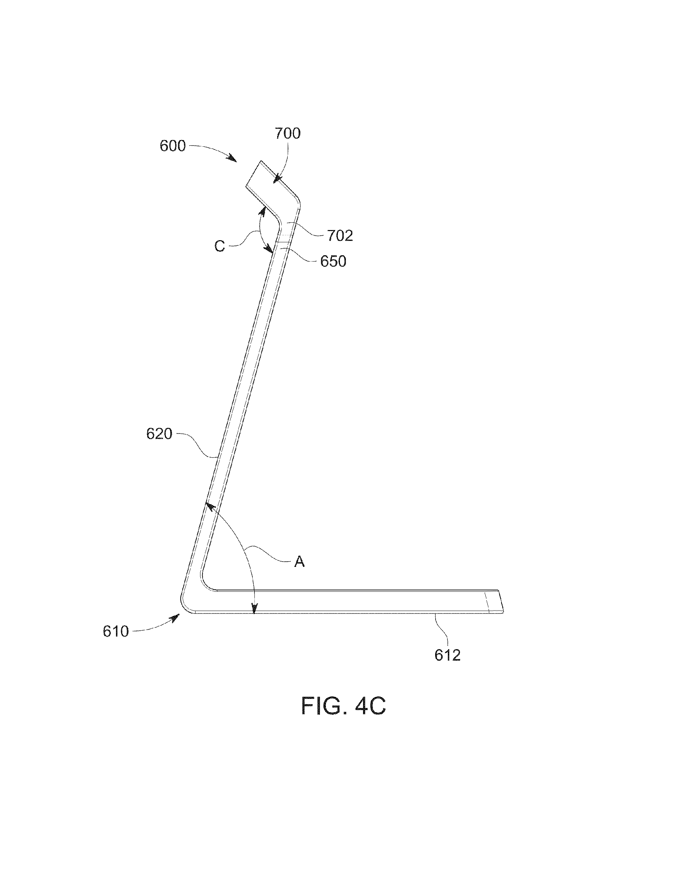

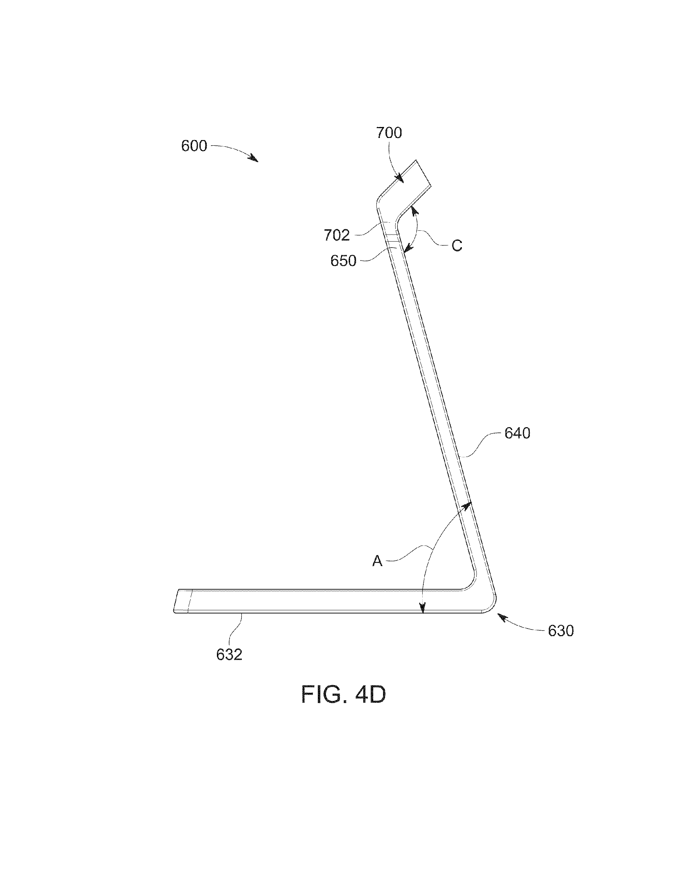

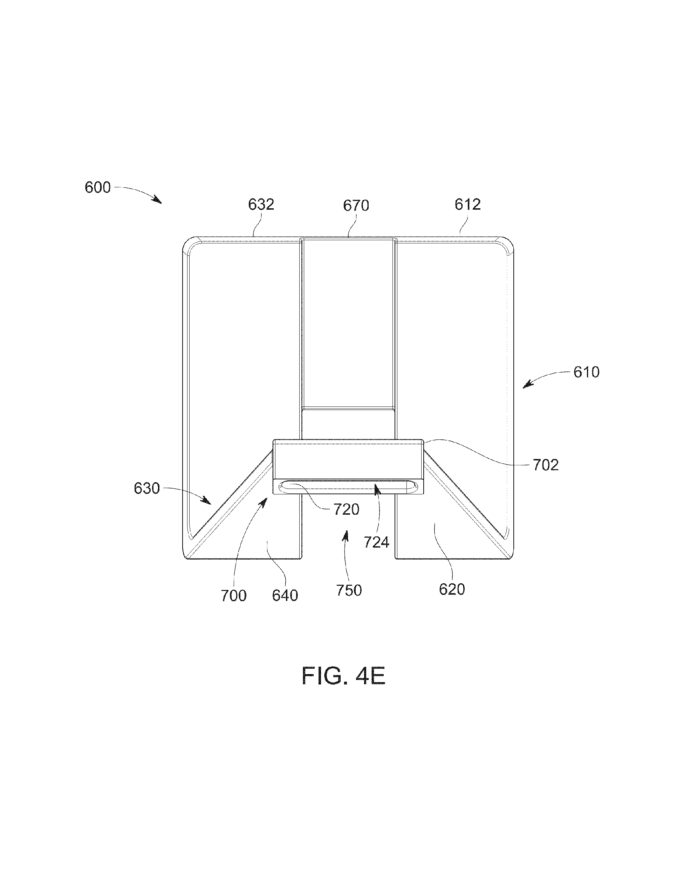

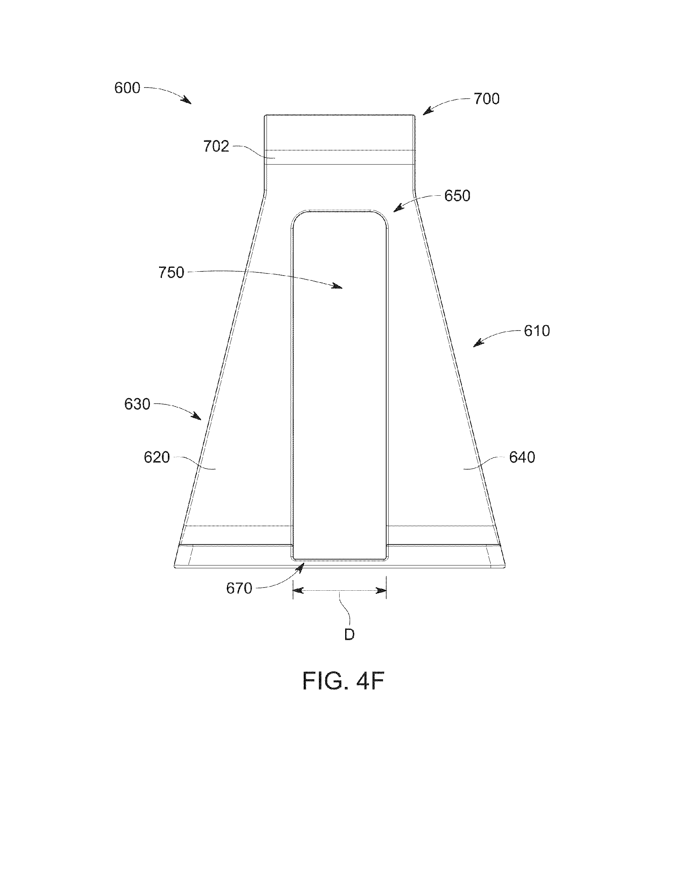

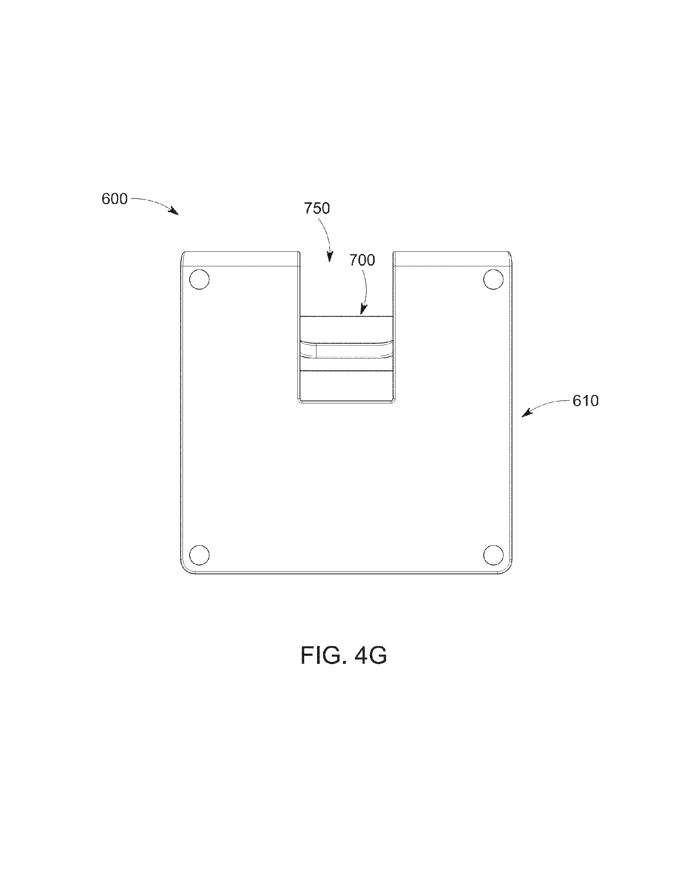

Figures 1 to 6C illustrate an integrable modular lottery terminal 100 of one example embodiment of the present disclosure.

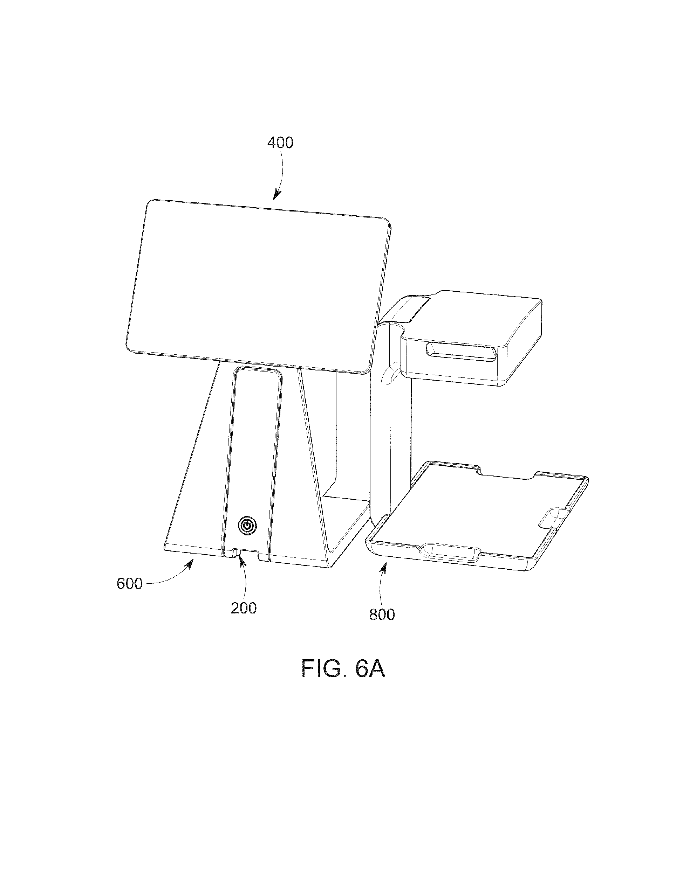

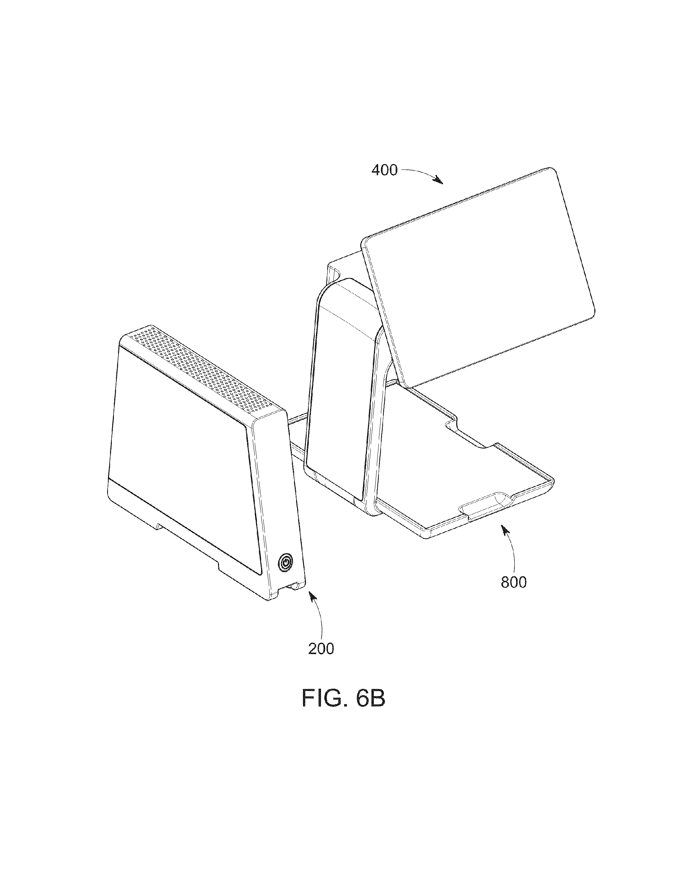

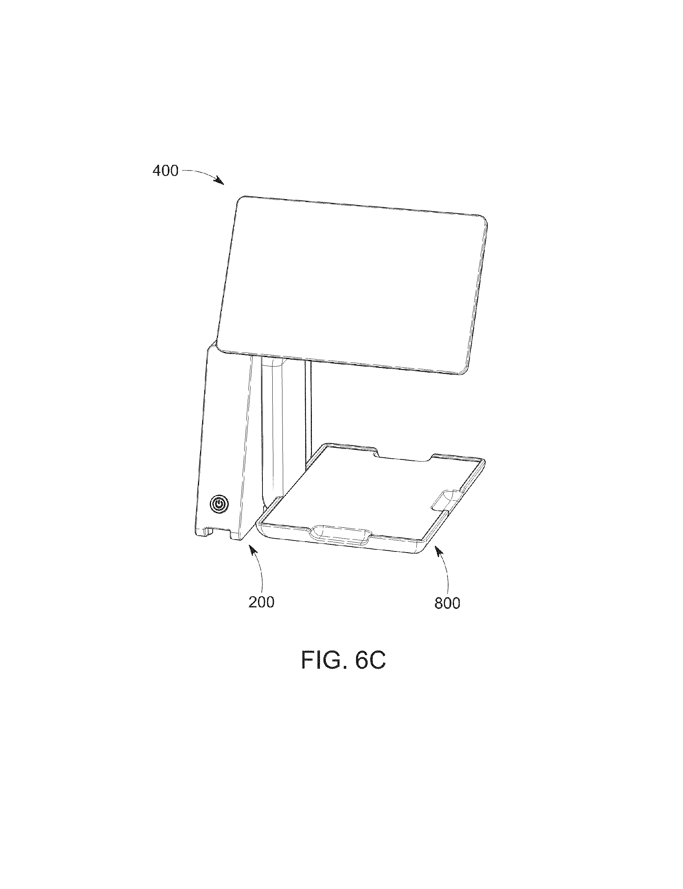

The integrable modular lottery terminal 100 includes:(1) a CPU unit 200; (2) a display device 400; (3) a display device stand 600; and (4) a lottery ticket play slip reader 800. For brevity, the lottery ticket play slip reader 800 may be referred to herein as "the play slip reader" without limiting the present disclosure. The CPU unit 200, the display device 400, the display device stand 600, and the lottery ticket play slip reader 800 are configured to be positioned and thus integrated in various different configurations such as further described herein such as to account for different amounts of space available on a support structure for the integrable modular lottery terminal 100. Figures 6A, 6B, and 6C indicate different example configurations for the integrable modular terminal 100 such as further discussed below.

More specifically, the CPU unit 200 includes a CPU housing 210, a frame (not shown) inside the housing 210, and CPU components (not shown) inside of the CPU housing 210.

The CPU housing 210 includes a bottom wall 220, a front wall 230, a rear wall 240, a first (left) side wall 250, a second (right) side wall 260, and a top wall 270. In this example embodiment, the bottom wall 220, the front wall 230, the rear wall 240, the first (left) side wall 250, and the top wall 270 form a main chassis and the side wall 260 is removably attached to that main chassis. In other embodiments, these walls can be connected in other suitable manners.

In this example embodiment, the outer surface of the first side wall 250 is spaced-apart from the outer surface of the second side wall 260 a distance W. In this example embodiment, W is slightly lesser than space defined by the stand 600 such that the CPU unit 200 can be positioned in and thus integrated with the stand 600 as discussed herein.

In this example embodiment, the front wall 230 is angled rearwardly from the bottom wall 230 to the top wall 270. In this example embodiment, the angle A is the same angle (or can be substantially the same - such as within 5-10 degrees different than) that the angle of the legs of the stand 600 extend at (as explained below) such that when the CPU unit 200 is positioned in and thus integrated with the stand 600, these components are aligned. In this example embodiment, the angle A is an acute angle, and specifically 75 degrees; however, it should be appreciated that this angle can vary in accordance with the present disclosure.

The bottom wall 220 includes four lower sections 222a, 222b, 222c, 222d. The bottom wall 220 includes a first upper central section 224 that extends between sections 222a and 222c. The bottom wall 220 includes a second upper central section 226 that extends between sections 222b and 222d. The bottom wall 220 includes a third upper central section 228 that extends between sections 222a and 222b and that extends between sections 222c and 222d. The bottom wall 220 thus defines a stand receipt area 229 configured to receive part of the display device stand 600, and specifically the leg connector 670 of the display device stand 600 (discussed below).

The CPU housing 210 also includes four rubber feet 282a, 282b, 282c and 282d connected to the bottom wall 220. These adjustable feet enable the adjustment of the height and the leveling of the CPU unit 200 on a support (such as on a counter at a retail location).

In this example embodiment, the outer surface of the bottom wall 220 is spaced-apart from the outer surface of the top wall 270 a distance H. In this example embodiment, H is slightly lesser than the interior vertical space V defined by the stand 600 such that the CPU unit 200 can be positioned in and thus integrated with the stand 600 as discussed herein.

The CPU chassis of the CPU unit 200 includes suitable space for electrical connectors (not shown). These electrical connectors can include a power cord electrical connector, a display device electrical connector, a reader electrical connector, a printer electrical connector, and one or more data network connectors. In certain embodiments, the lower portion of the rear wall toward and/or part of the bottom wall includes such space.

As mentioned above, the CPU unit 200 includes multiple internal electronic components including but not limited to a processing device (or devices) communicatively connected to a memory device (or devices). For instance, the CPU unit 200 can include a programmable logic controller. The processing device can include any suitable processing device such as, but not limited to, a general-purpose processor, a special-purpose processor, a digital-signal processor, one or more microprocessors, one or more microprocessors in association with a digital-signal processor core, one or more application-specific integrated circuits, one or more field-programmable gate array circuits, one or more integrated circuits, and/or a state machine. The memory device can include any suitable memory device such as, but not limited to, read-only memory, random-access memory, one or more digital registers, cache memory, one or more semiconductor memory devices, magnetic media such as integrated hard disks and/or removable memory, magneto-optical media, and/or optical media. The memory device stores instructions executable by the processing device to control operation of the integrable modular lottery terminal 100.

The CPU unit 200 can be communicatively and operably connected to each of the display device 400, the reader 800, a lottery ticket printer (not shown), a handheld scanner (not shown), and a lottery ticket central system (not shown), and configured to receive signals from and send signals to those components. The CPU unit can be communicatively connectable (such as via Wi-Fi, Bluetooth, near-field communication, or other suitable wireless communications protocol) to such devices.

The display device 400 includes a display device housing 410, a connector arm 500 connected to and extending rearwardly from the display device housing 410, a combination display screen and touch screen 550 within the housing 410, and various other suitable components (not shown) that facilitate the operation of the display device 400.

The display device 400 includes a frame (not shown) inside the housing 410 that supports the combination display screen and touch screen 550.

The rear portion of the housing 410 include can include one or more ports (not shown) that enable access to wire connectors (not shown).

The combination display screen and touch screen 550 is configured to receive operator inputs such as in a conventional manner. The display device 400 is thus configured to provide an operator interface. The display device 400 and particularly the combination display screen and touch screen 550 are communicatively connected (such as wirelessly or by a hard wire (not shown)) to the CPU unit 200 to send signals to and to receive signals from the CPU unit 200.

The connector arm 500 extends from the rear wall 440 and is configured to support the display device 400.

The connector arm 500 extends from the rear wall 440 and is configured to connect the display device 400 to the stand 600 or the reader 800 as further described herein.

The connector arm 500 can include one or more internal support structures (not shown) that support the connector and that are attached to the frame of the display device 400.

The connector arm 500 extends at an angle rearwardly downwardly and outwardly from the rear wall 440 of the display device 400. In this example embodiment, the angle B is an acute angle, and specifically 30 degrees; however, it should be appreciated that this angle can vary in accordance with the present disclosure.

Additionally, although not shown, the connector arm 500 can include a pivot mechanism that enables the connector arm to pivot and enables the display device 400 to pivot around a horizontal axis (to facilitate operator input). In various embodiments, the pivot angle can be adjusted from zero degrees (perpendicular to the counter surface) to at least 45 degrees. In various such embodiments, the pivot mechanism is a friction pivot mechanism that is configured to remain in the operator adjusted position.

The connector arm 500 includes a top, bottom, side, and rear surfaces (not labeled). These surfaces of the connector arm 500 define the height, width, depth, and shape of the connector arm 500. The connector arm 500 can be otherwise sized, shaped, and configured in accordance with the present disclosure. In other embodiments, the display device can include multiple connector arms in accordance with the present disclosure.

The connector arm 500 is sized, shaped, and otherwise configured to be inserted into the connector arm receiver 700 (described below) of the stand 600 such that the stand 600 supports the display device 400 such as show in Figure 6A.

The connector arm 500 is sized, shaped, and otherwise configured to be alternatively inserted into a connector arm receiver of the reader 800 such as the connector arm receiver 900 (described below) of the reader 800 such that the reader 800 supports the display device 400 such as show in Figures 6B and 6C.

The display device stand 600 includes a first leg 610, a second leg 630, a waist 650, a leg connector 670, and a connector arm receiver 700. In various embodiments, these components are monolithically formed and thus the display device stand is one piece. In other embodiments, the display device stand can be formed from multiple pieces.

The first leg 610 includes a horizontally extending first foot 612 and an upwardly extending first support 620 connected to the first foot 612. The first support 620 extends rearwardly at the angle A from the first foot 612. In this example embodiment, the angle A is an acute angle, and specifically 75 degrees; however, it should be appreciated that this angle can vary in accordance with the present disclosure.

The second leg 630 includes a horizontally second foot 632 and an upwardly extending second support 640 connected to the second foot 632. The second support 640 also extends rearwardly at the angle A from the second foot 632. In this example embodiment, the angle A is an acute angle, and specifically 75 degrees; however, it should be appreciated that this angle can vary in accordance with the present disclosure.

The first foot 612 and the second foot 632 are configured to be positioned on a support (such as a counter at a retail location).

The feet 612 and 632 of first and second legs 610 and 630 include respective inner edges (not labelled) that extend parallel to each other.

The supports 622 and 640 of first and second legs 610 and 630 include respective inner edges (not labelled) that extend parallel to each other.

The feet 612 and 632 of first and second legs 610 and 630 include respective outer edges (not labelled) that extend parallel to each other.

The supports 622 and 640 of first and second legs 610 and 630 include respective outer edges (not labelled) that extend at angles from the feet to tops of the supports.

The first leg 610 is spaced-apart from the second leg 630, and specifically the first foot 612 is spaced-apart from the second foot 632 a distance D, and the first support 620 is also spaced-apart from the second support 640 the distance D. In this example embodiment, D is slightly greater than W (the side-to-side width of the CPU unit 200). This spacing enables the CPU unit 200 to be positioned between and thus integrated with these legs 610 and 630 such as shown in Figure 6A.

The waist 650 is connected to the respective top sections (not labelled) of the supports 620 and 640 of the legs 610 and 630 and thus connects those sections and the legs 610 and 630.

The leg connector 670 is connected to the respective inner sections (not labelled) of the feet 612 and 632 of the legs 610 and 630 and thus connects those sections and the legs 610 and 630.

The leg connector 670 has a height, length, and width (not labelled) that enables the leg connector 670 to be received by and extend upwardly into the stand receipt area 229 defined by the CPU unit 200 when the CPU unit 200 is positioned between and thus integrated with the legs 610 and 630 of the stand 600. In this position, the adjacent positioning of the leg connector 670 and the respective four lower sections 222a, 222b, 222c, and 222d of the bottom wall 220 of the CPU unit 200 prevent the forward and rearward movement of the CPU unit 200 relative to the stand 600. In other words, the leg connector 670 keeps the CPU unit 200 in the aligned position with the stand 600.

The connector arm receiver 700 is configured to receive and securely hold the connector arm 500 of the display device 400 and thus the entire display device.

The connector arm receiver 700 includes a bottom section 702 connected to the top of the waist 650. The connector arm receiver 700 includes an upper section 710 connected to the top of the lower section 702 and forwardly extending at an angle from the lower section 702. The upper section 710 of the connector arm receiver 700 includes top, bottom, side, and front outer surfaces (not labelled) and an interior surface 720. The interior surface 720 of the connector arm receiver 700 defines a connector arm receiving slot 724 sized, shaped and otherwise configured to receive the connector arm 500 of the display device 400.

In this example embodiment, the connector arm receiver 700, the interior surface 720, and the connector arm receiving slot 724 are each oval in shape such that the connector arm 500 of the display device 400 can tightly fit into the connector arm receiving slot 724 and such that the connector arm receiver 700 securely receives and holds the connector arm 500 of the display device 400. These shapes can vary in accordance with the present disclosure.

It should be appreciated that one or both of the connector arm receiver 700 and the connector arm 500 can include or be employed with one or more structures (not shown) that enhance this engagement such as but not limited to one or more ribs, grooves, protrusions, brackets, pins, etc.

The connector arm receiver 700 extends at an angle C from the waist 650. In this example embodiment, the angle A is an obtuse angle, and specifically 120 degrees; however, it should be appreciated that this angle can vary in accordance with the present disclosure.

The display device stand 600 is thus configured to receive and interact with the CPU unit 200 and configured to receive part of and support the display device 600.

The slip reader 800 includes a base 810, a scanner unit supporter 840, and a scanner unit 880.

The base 810 is generally rectangular and includes a tray 812 having a platen 816 supported by a lower portion 814.

The base 810 includes a support connector 817 configured to facilitate connection with the of the scanner unit supporter 840.

The tray 812 also defines three access pockets 818a, 818b, and 818c that each enable an operator to lift a bet slip, a ticket, or other substrate that is resting on the platen 816 from that platen 816.

The base 810 also includes four compliant feet 832a, 832b, 832c, and 832d connected to the lower portion 814 wall 220. These feet are configured to conform to the counter surface to prevent rocking.

The base 810 is of a sufficient size, shape, configuration, and weight to not only support the reader 889, but to also support the display device 400 such as described below, and in alternative embodiments multiple display devices such as described below.

The scanner unit supporter 840 is connected to the base 810 at its bottom end (not labeled) and connected to the scanner unit 880 at its top end (not labelled).

The scanner unit supporter 840 includes a suitable base connector 844 configured to facilitate connection of the scanner unit supporter 840 to the base 810.

The scanner unit supporter 840 includes a suitable scanner connector 848 configured to facilitate connection of the scanner unit supporter 840 to the scanner unit 880.

The scanner unit 880 extends transversely from the scanner unit supporter 840 over part of and spaced above the base 810. The scanner unit 880 includes a scanner housing 882, a scanner (not shown), and lighting components (not shown) supported by the scanner housing 882 in a downward facing position.

The scanner unit 880 and specifically the scanner is configured to scan or otherwise read: (1) paper play slips positioned on or above the base 810; (2) barcodes that are associated with digital play slips positioned on or above the base 810; (3) QR codes that are associated with digital play slips positioned on or above the base 810; (4) barcodes that are associated with lottery tickets positioned on or above the base 810; and/or (5) QR codes that are associated with lottery tickets positioned on or above the base 810. The scanner unit 880 can additionally be configured to take images of such or other documents. In various embodiments, the scanner unit 880 and specifically the scanner is configured to scan or otherwise read codes such as bar codes or QR codes on lottery tickets play slips to enable the purchase of draw lottery tickets via the integrable modular lottery terminal 100. In various embodiments, the scanner unit 880 and specifically the scanner is configured to scan or otherwise read codes such as bar codes or QR codes on lottery tickets (such as on draw lottery tickets or instant lottery tickets) positioned on or above the base 810 for redemption purposes. The scanner is not further described herein for brevity and since such scanners are well known in the lottery industry. It should be appreciated that the scanner unit can include one or more digital cameras that functions as scanners and one or more suitable lighting mechanisms.

The scanner housing 882 includes top, bottom, and side walls (not labeled) as well as a suitable supporter connector 886.

In this example, the scanner housing 882 include one, two or three connector arm receivers such as connector arm receiver 890 configured to receive and securely hold the connector arm 500 of the display device 400 and thus the entire display device. The connector arm receivers are each configured to support the display device in a direction, and the multiple connector arm receivers are configured to support the display device in different directions.

The connector arm receiver 890 includes an interior surface 892 that defines a connector arm receiving slot 894 sized, shaped and otherwise configured to receive the connector arm 500 of the display device 400. In this example embodiment, the connector arm receiver 890, the interior surface 892, and the connector arm receiving slot 894 are each oval in shape such that the connector arm 500 of the display device 400 can tightly fit into the connector arm receiving slot 894 and such that the connector arm receiver 890 securely receives and holds the connector arm 500 of the display device 400. These shapes can vary in accordance with the present disclosure. It should be appreciated that one or both of the connector arm receiver 890 and the connector arm 500 can include or be employed with one or more structures (not shown) that enhance this engagement such as but not limited to one or more ribs, grooves, protrusions, brackets, pins, etc.

It should be appreciated that the scanner unit 880 can thus support the display device 400 of the integrable modular lottery terminal 100 instead of the stand 400 such as shown in Figures 6B and 6C. In such configurations, the stand 400 is not employed.

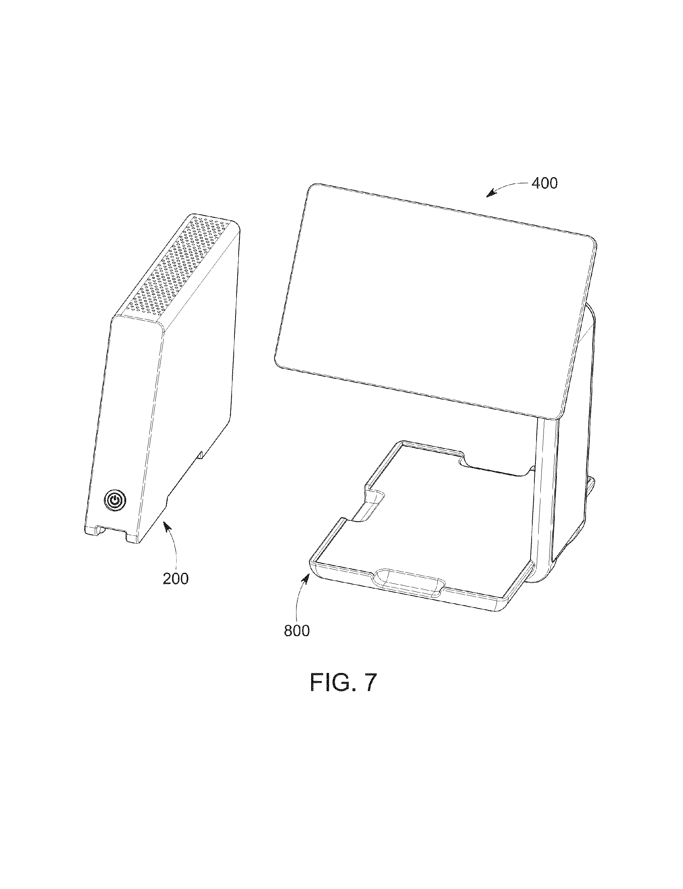

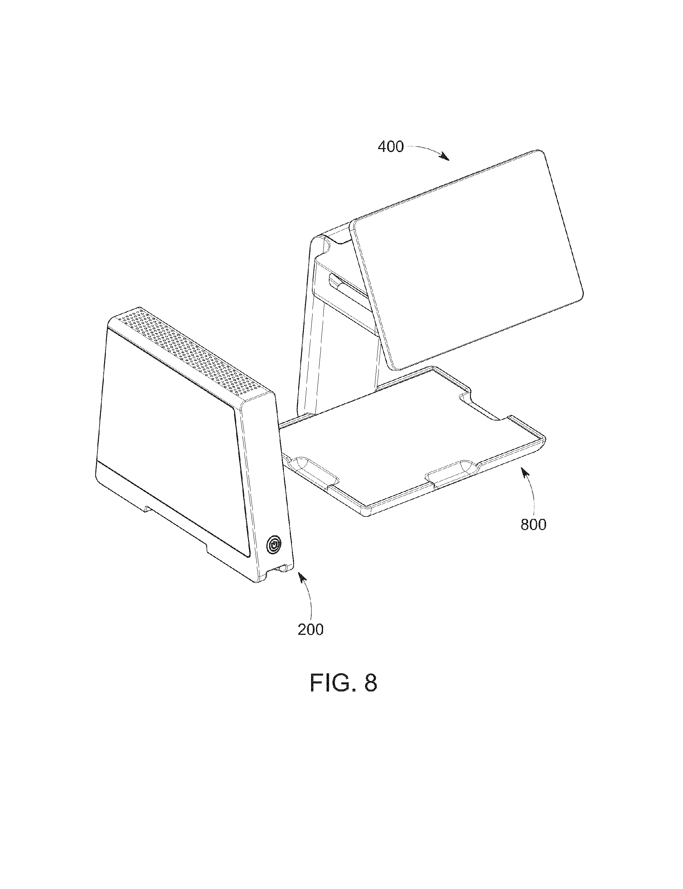

It should also be appreciated that the reader 840 can include the connector arm receiver facing in any one of the different directions such that the connector arm 500 of the display device 400 and thus the entire display device 400 can be connected to the reader 840 at such different positions and facing in any of such different directions such as shown in Figures 7 and 8. In these examples, the respective side of the scanner unit 880 includes the connector arm receiver.

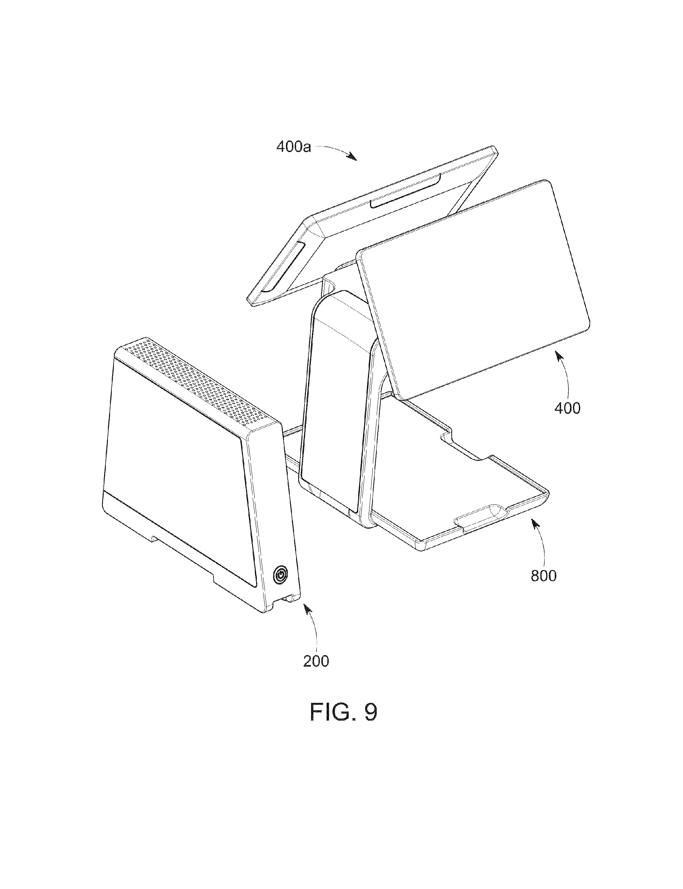

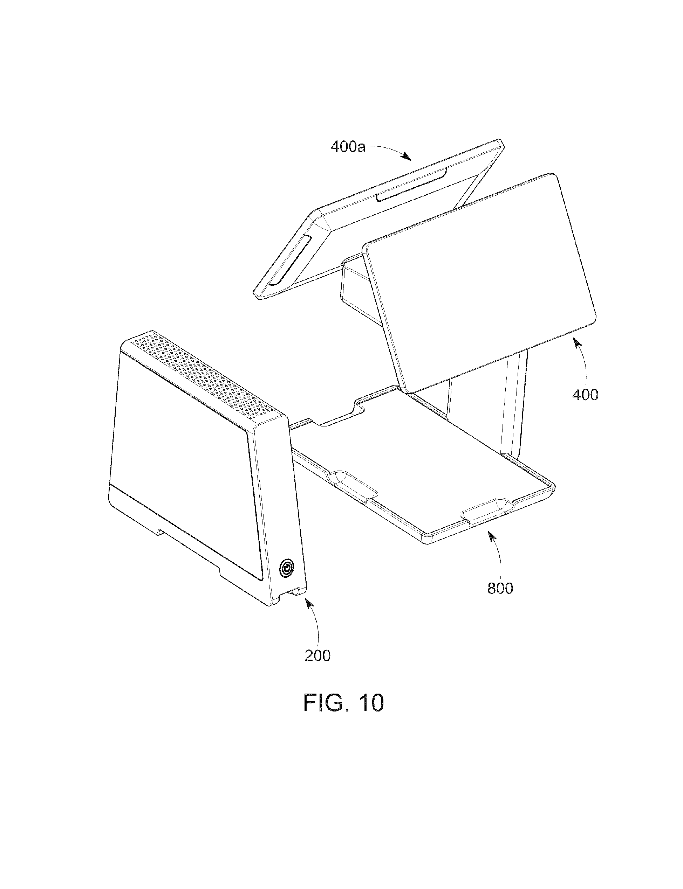

It should also be appreciated that the scanner unit 880 can include multiple connector arm receivers (not shown) facing in different directions such that the connector arm 500 of the display device 400 and thus the entire display device 400 can be connected to the scanner unit 880 at any one of the different various different positions, or that multiple display devices can be connected to the scanner unit 880 such as shown in Figures 9 and 10.

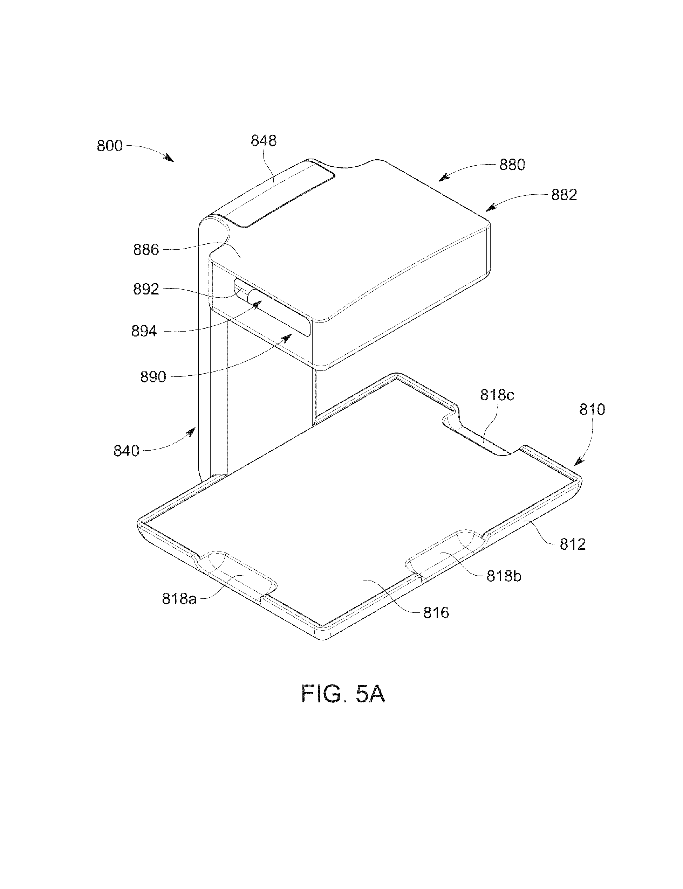

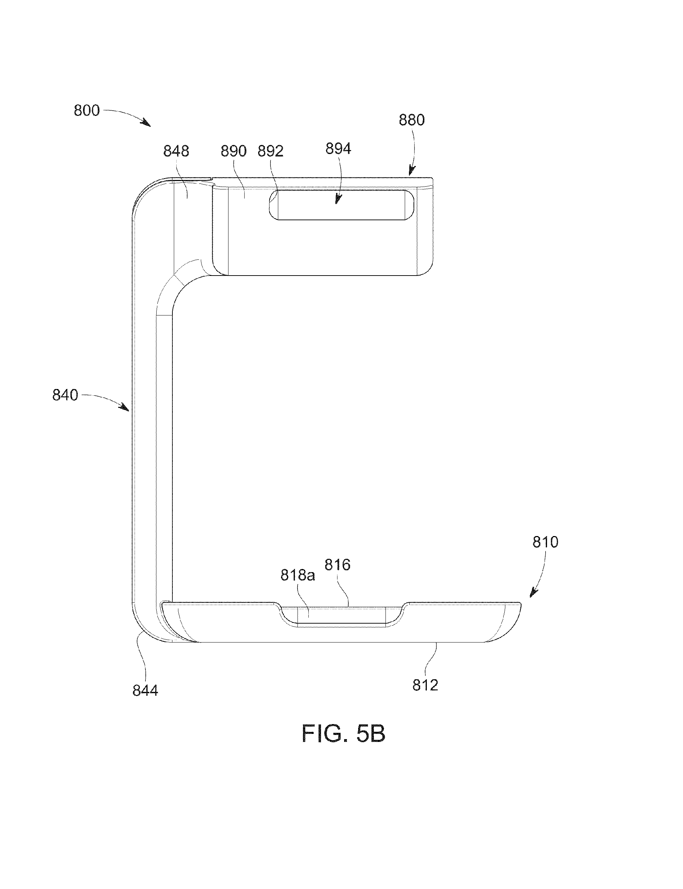

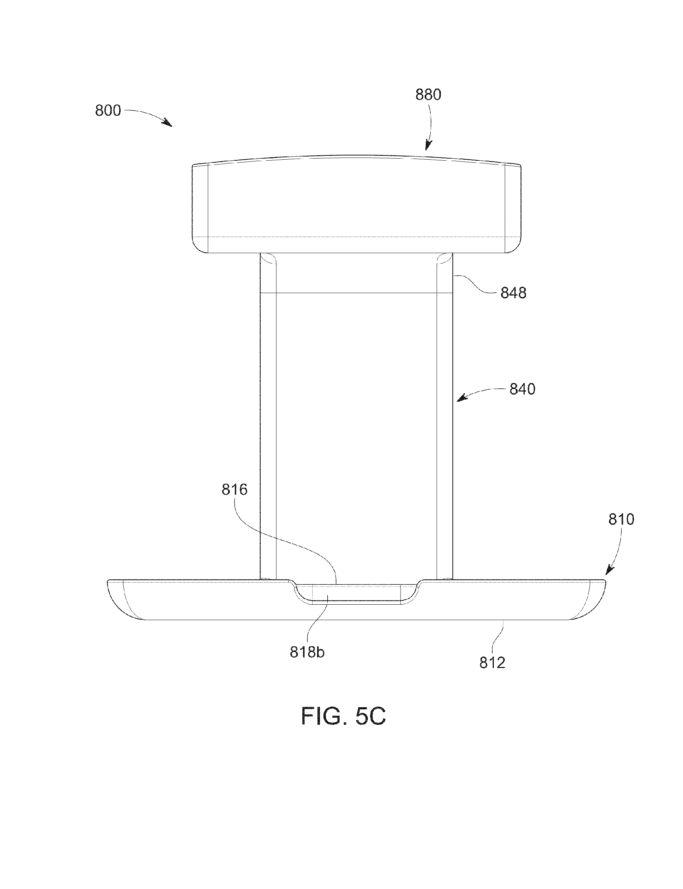

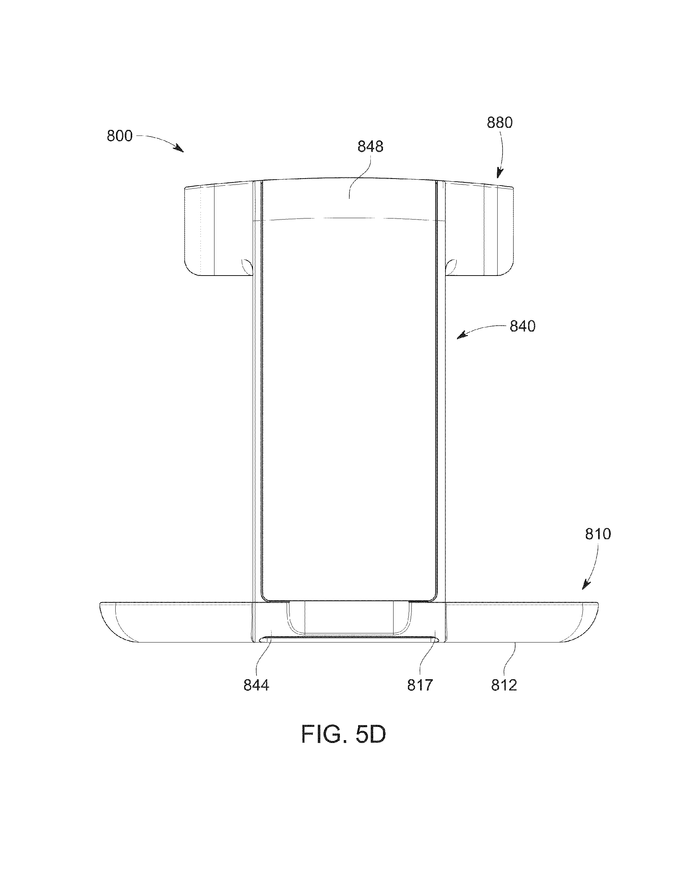

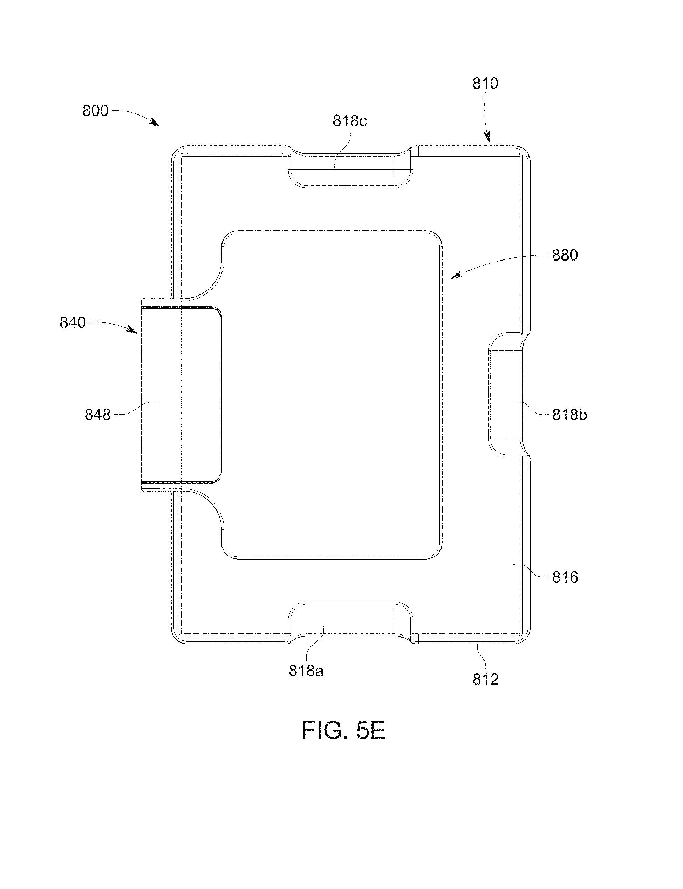

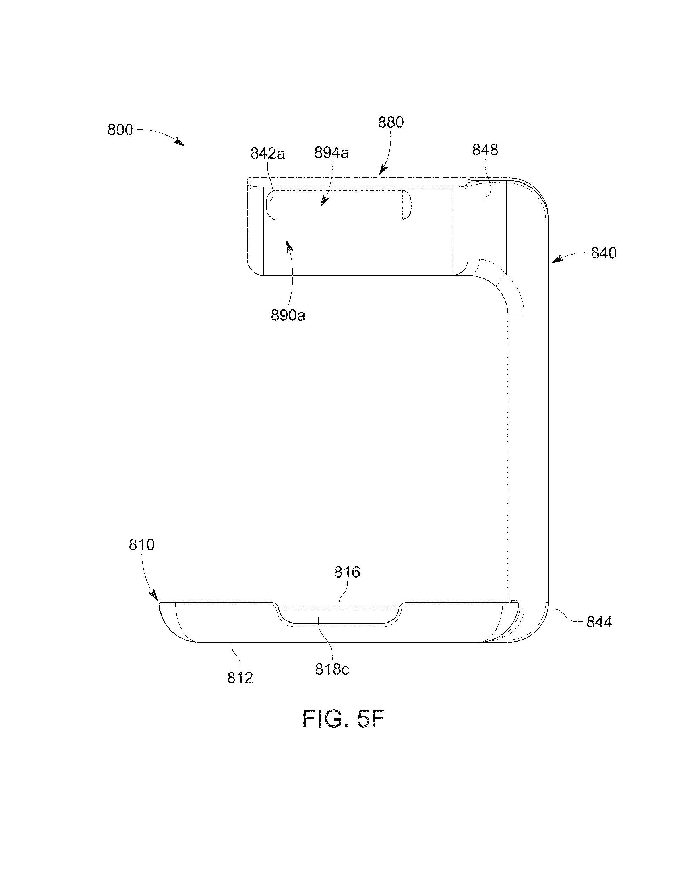

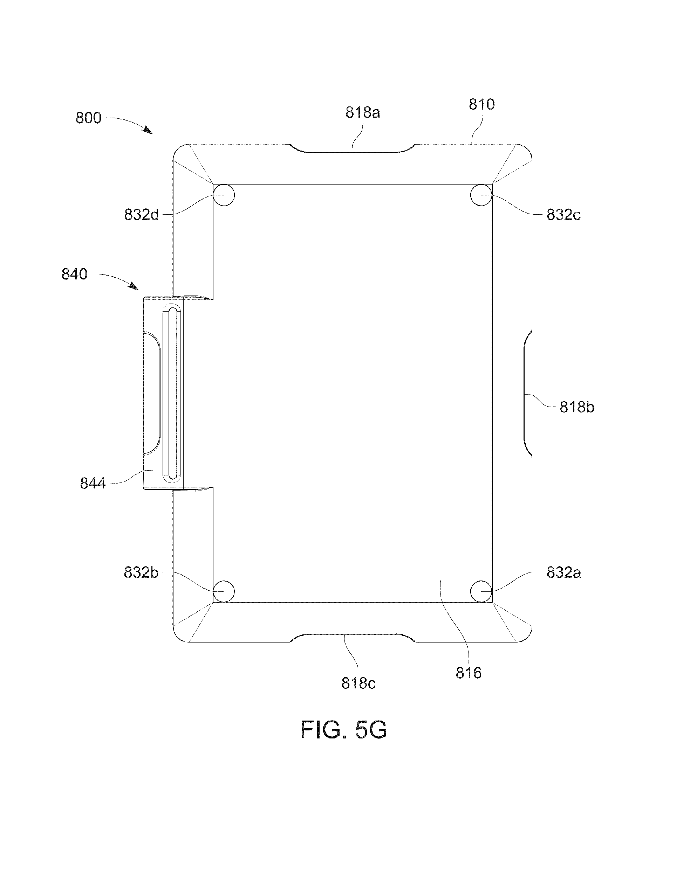

In this example illustrated embodiment, the scanner unit 880 also includes the connector arm receiver 890a that includes an interior surface 892a that defines a connector arm receiving slot 894a sized, shaped, and otherwise configured to receive the connector arm 500 of the display device 400 as best shown in Figure 5F.

The integrable modular lottery terminal 100 also includes one or more suitable power supply cords (not shown) and other electrical cords (not shown) that are connectable to the CPU unit 200, the display device 400, and the lottery ticket play slip reader 800, and that enable such devices to obtain electric power from a suitable power supply and/or communicate with each other. The power supply is electrically connected to (via suitable wiring and other components) and configured to power several components of the integrable modular lottery terminal 100. The power supply can be any suitable electric power supply.

The integrable modular lottery terminal 100 can include various other suitable components (not shown) that facilitate the operation of the lottery terminal 100 such as but not limited to a lottery ticket printer (not shown) and/or a handheld scanner (not shown).

As mentioned above Figures 1, 6A, 6B, and 6C indicate these four components and different example configurations for the integrable modular terminal 100.

More specifically, Figure 1 partially indicates a first configuration wherein the CPU unit 200, the stand 600, and the lottery ticket play slip reader 800 are all separated and spaced apart. In this configuration, the display device 400 would be connected to the stand 400 (unlike as shown separated in Figure 1).

Figure 6A shows a second configuration wherein the CPU unit 200 is positioned in the stand 600 and the display device 400 is connected to the stand 600, and wherein the lottery ticket play slip reader 800 is adjacent the stand 600. This configuration enables the reader 800 to be located separately from the clerk display device 400.

Figure 6B shows a third configuration wherein the stand 600 is not employed, the display device 400 is connected to the play slip reader 800, and the CPU unit 200 is spaced from the stand 600 and the display device 400. This configuration keeps the reader 800 and the clerk display device together, while locating the CPU unit elsewhere to fit into the retail location better.

Figure 6C shows a fourth configuration wherein the stand 600 is not employed, the display device 400 is connected to the play slip reader 800, and the CPU unit 200 is attached to the stand 600 with optional brackets (not shown) and the display device 400. This keeps all of the components together if the retailer space allows.

Figure 7 shows a fifth configuration wherein the stand 600 is not employed, the display device 400 is connected to the play slip reader 800 in a different direction, and the CPU unit 200 is spaced- apart from the stand 600 and the display device 400. This configuration enables the display unit 800 to be attached to the reader 800 with the reader support on the right side. This configuration enables access to the read area from the left side if the retailer space requires access from that direction.

Figure 8 shows a sixth configuration wherein the stand 600 is not employed, the display device 400 is connected to the play slip reader 800 in a different direction, and the CPU unit 200 is spaced- apart from the stand 600 and the display device 400. This configuration enables the reader 800 to be placed 90 degrees from the standard and can be used if there is limited depth available in the retailer space.

Figure 9 shows a seventh configuration wherein the stand 600 is not employed, the display device 400 is connected to the play slip reader 800, a second display device 400a is also connected to the play slip reader 800 and faces in a different direction than display device 400, and the CPU unit 200 is spaced-apart from the stand 600 and the display device 400. In this configuration, the display device 400 for the clerk is on one side of the reader 800 and the second display device 400 is used for customer information.

Figure 10 shows an eighth configuration wherein the stand 600 is not employed, the display device 400 is connected to the play slip reader 800, a second display device 400a is also connected to the play slip reader 800 and faces in a different direction than display device 400, and the CPU unit 200 is spaced-apart from the stand 600 and the display device 400. In this configuration, the display device 400 for the clerk is on one side of the reader 800 and the second display device 400 is used for customer information. The reader support is on the right side of the read area in case the retailer space requires access to the read area from the left.

### Integrable Modular Lottery Terminal - Second Example Embodiment

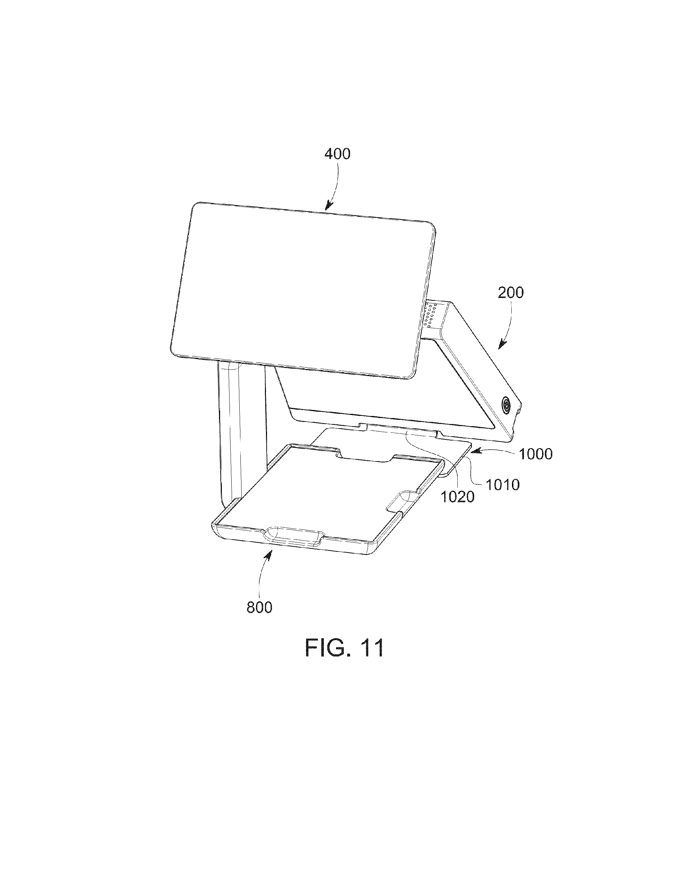

Figure 11 shows a ninth configuration wherein the stand 600 is not employed, the display device 400 is connected to the play slip reader 800, and the CPU unit 200 is connected to the reader 800 in a different manner. Figure 11 also shows a CPU unit connector 1000 that is part of the integrable modular lottery terminal of another example embodiment of the present disclosure. This CPU unit connector 1000 include a base engager 1010 configured to engage the base of the reader 800 and a CPU unit engager 1020 configured to engage the CPU unit 200. The CPU unit connector 1000 enables the CPU unit 200 to be positioned relative to and integrated with the reader 800. This configuration shows the flexibility of mounting the CPU unit in a nonconventional way should the retailer available space require a customized solution.

### Integrable Modular Lottery Terminal - Third Example Embodiment

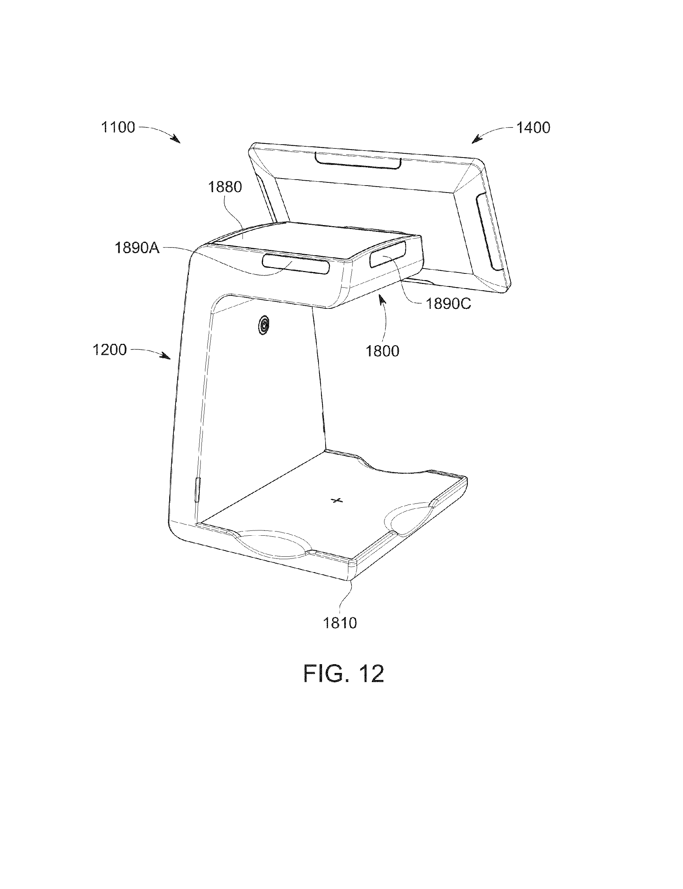

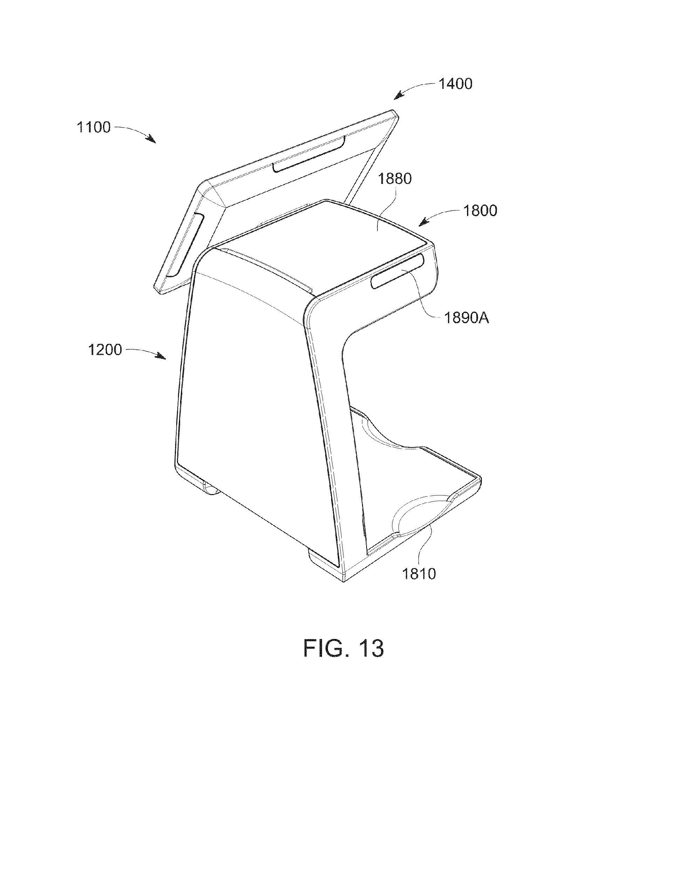

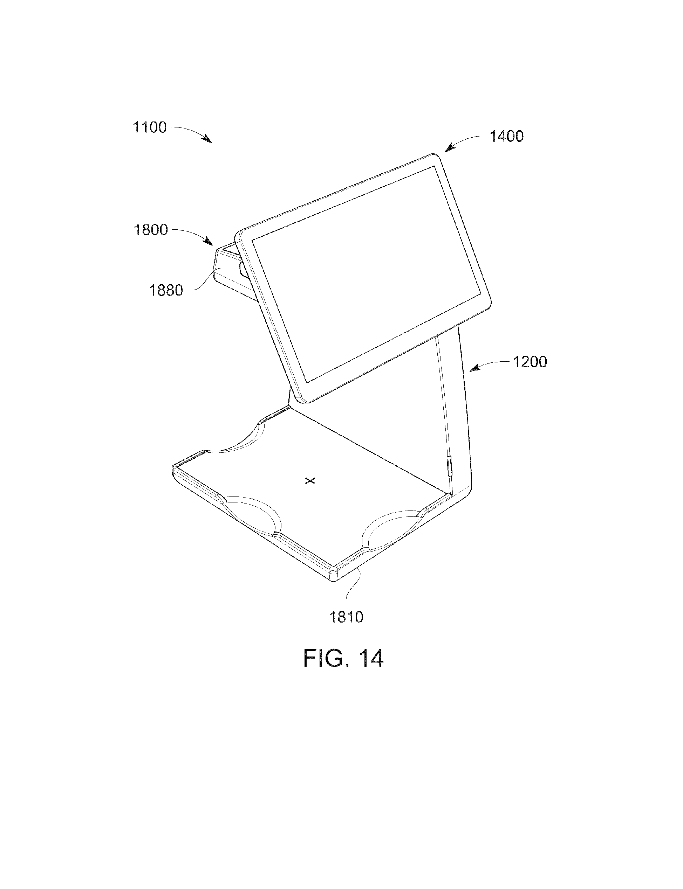

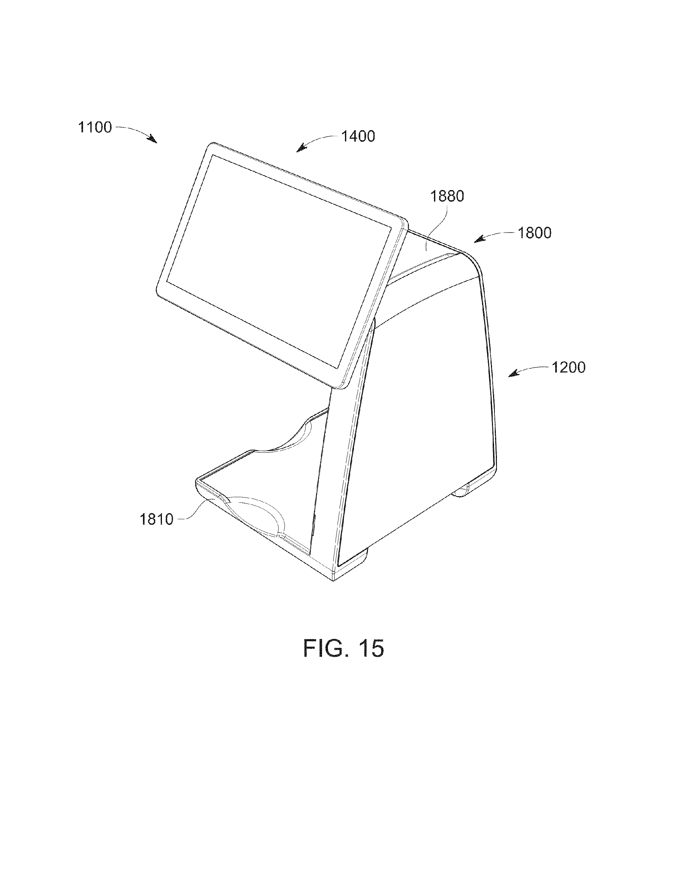

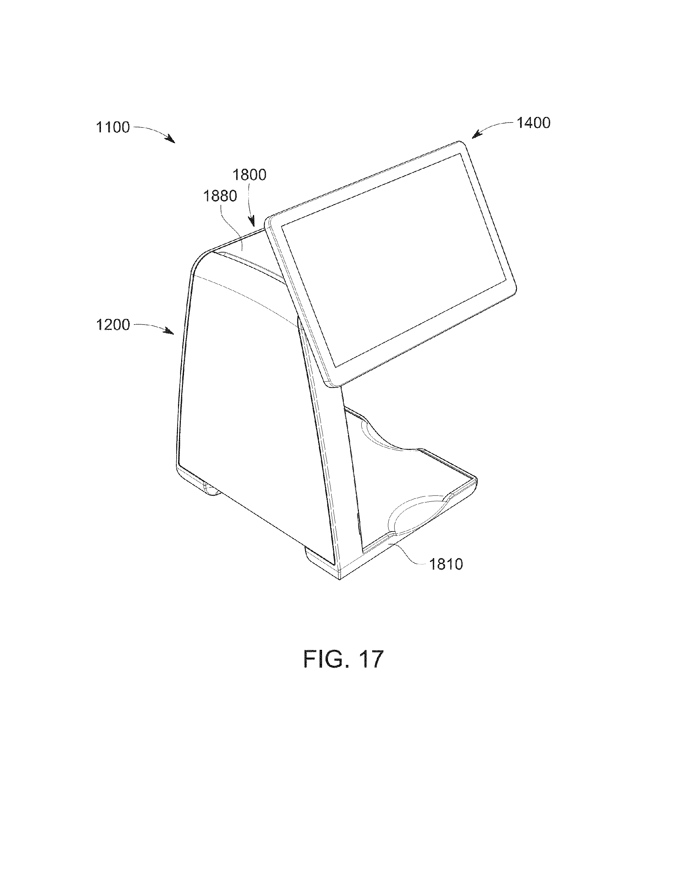

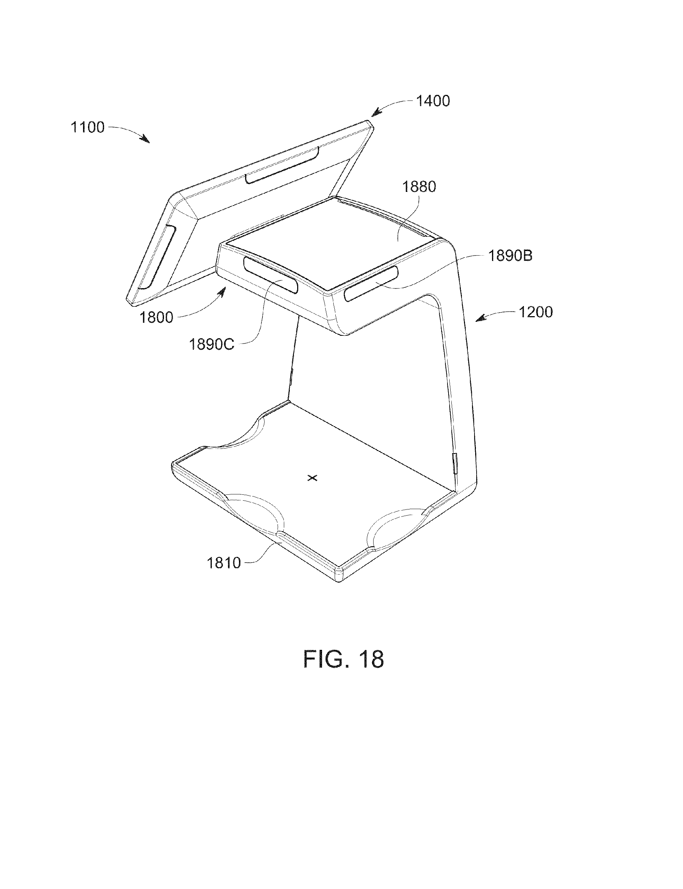

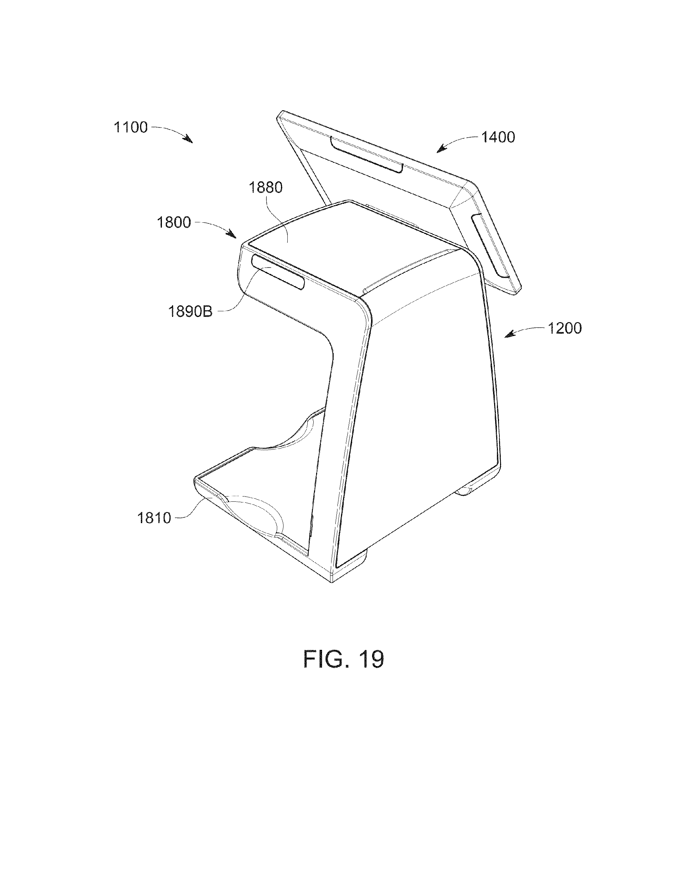

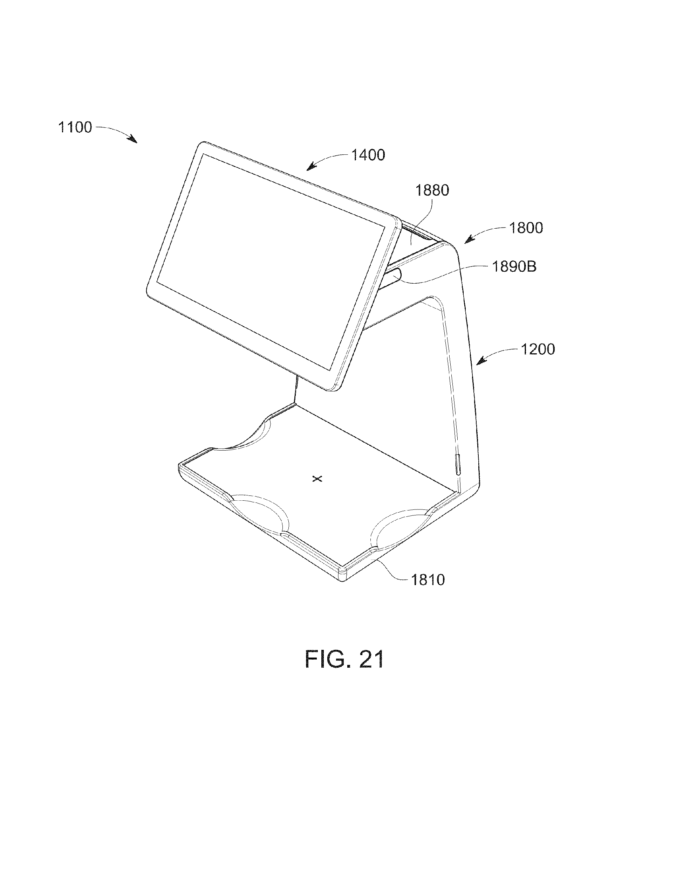

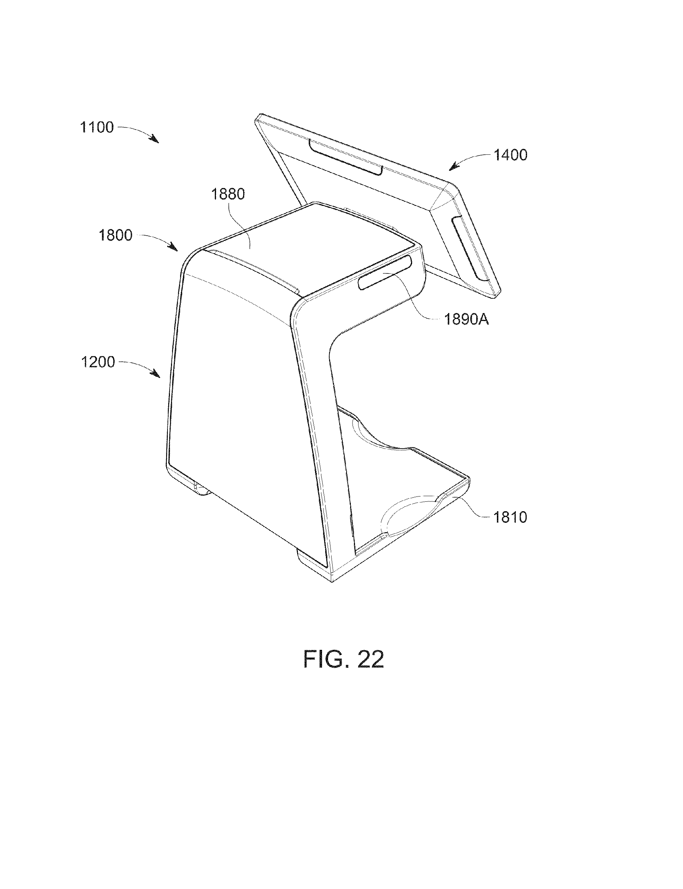

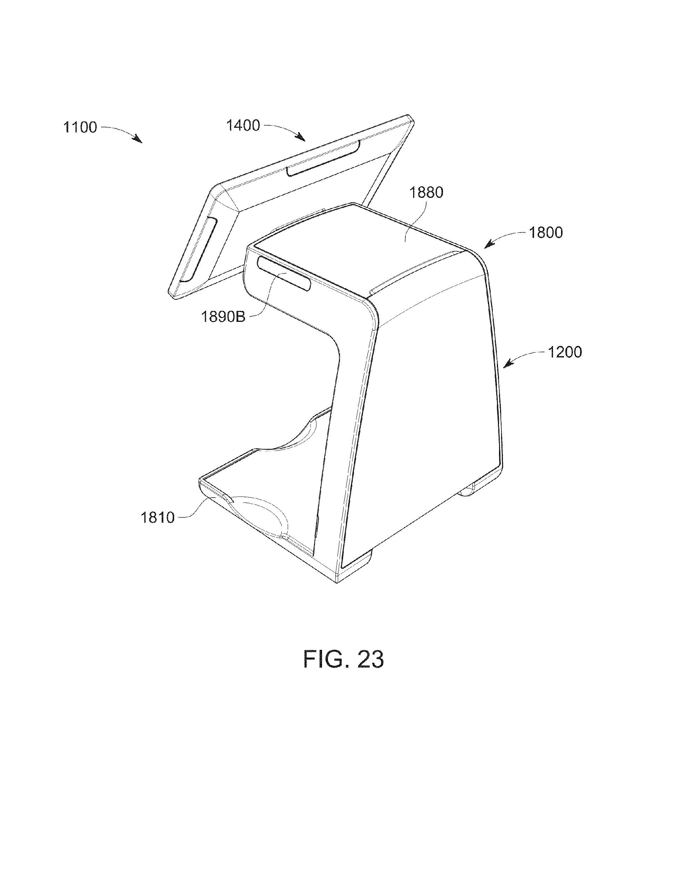

Figures 12, 13, 14, 15, 16, 17, 18, 19, 20, 21, 22, and 23 are different perspective views of an integrable modular lottery terminal 1100 including a CPU unit 1200, a display device 1400, and a lottery ticket play slip reader 1800 in accordance with another example embodiment of the present disclosure. This example does not include a display device stand.

In this example, the CPU unit 1200 is built into the lottery ticket play slip reader 1800 and specifically the CPU unit 1200 functions as the scanner unit supporter and is suitably connected to the base 1810 and the scanner unit 1880.

In this example, the scanner unit 1880 includes three connector arm receivers 1890A, 1890B, and 1890C that extend in different directions and that are thus configured to support one or more display devices in different directions. As mentioned above, although not shown, it should be appreciated that the reader 800 can include such multiple connector arm receivers.

Figures 12, 13, 14, and 15 illustrate a first configuration for the integrable modular lottery terminal 1100 wherein the display device 1400 is connected to and supported by the lottery ticket play slip reader 1800 in a first position.

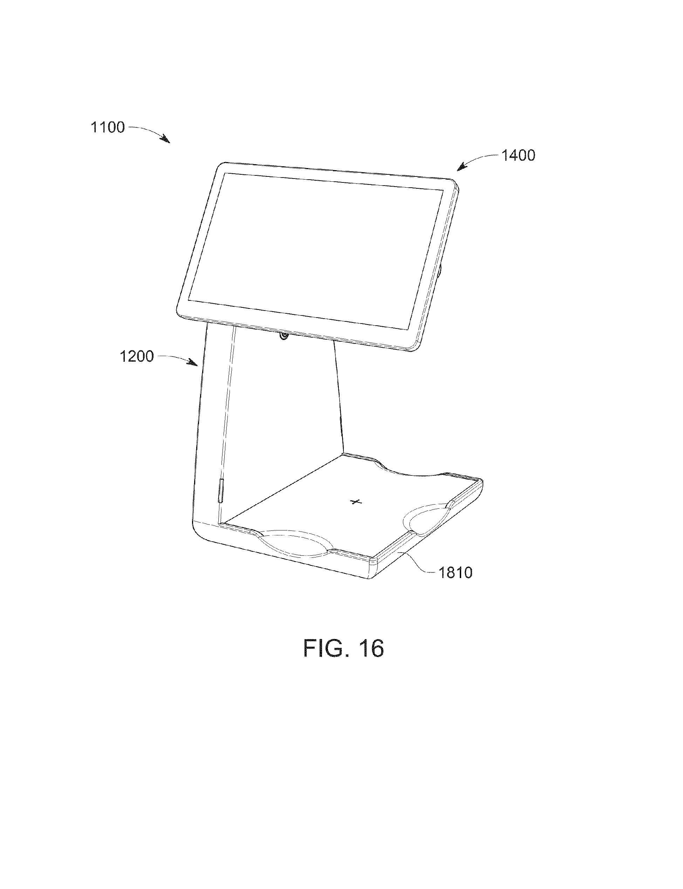

Figures 16, 17, 18, and 19 illustrate a second configuration for the integrable modular lottery terminal 1100 wherein the display device 1400 is connected to and supported by the lottery ticket play slip reader 1800 in a second position.

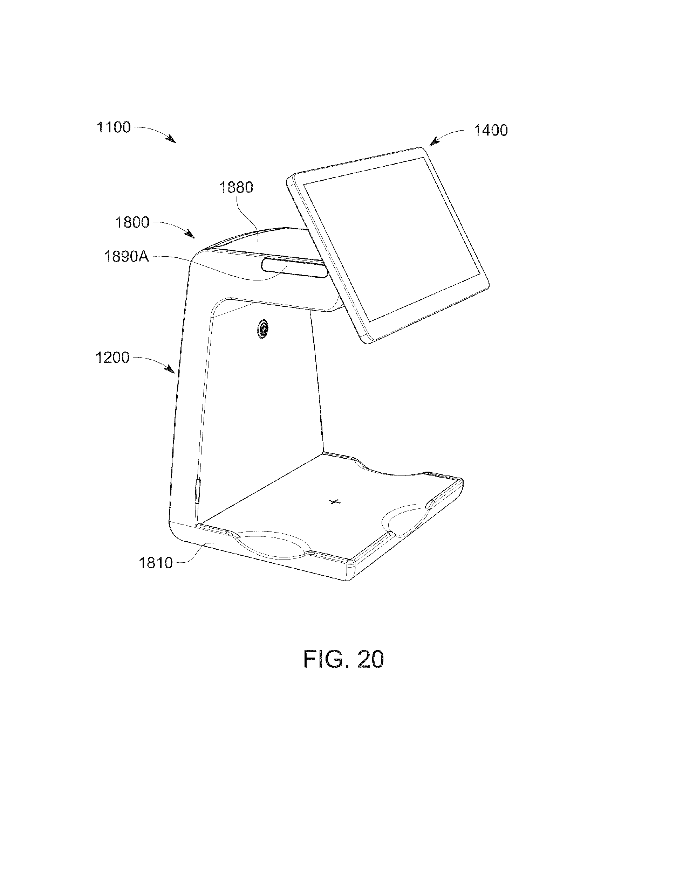

Figures 20, 21, 22, and 23 illustrate a third configuration for the integrable modular lottery terminal 1100 wherein the display device 1400 is connected to and supported by the lottery ticket play slip reader 1800 in a third position.

### Integrable Modular Lottery Terminal - Fourth Example Embodiment

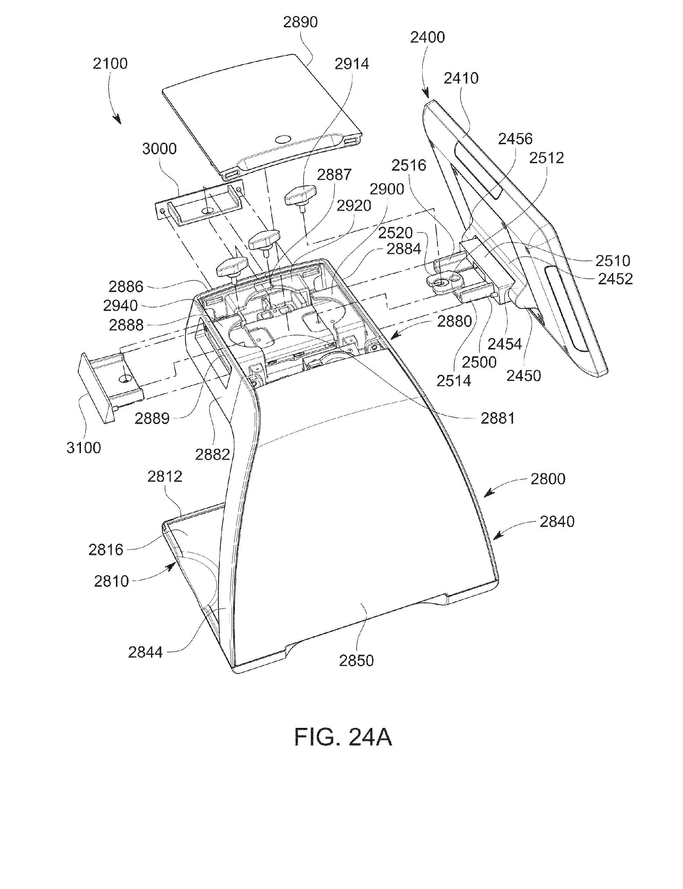

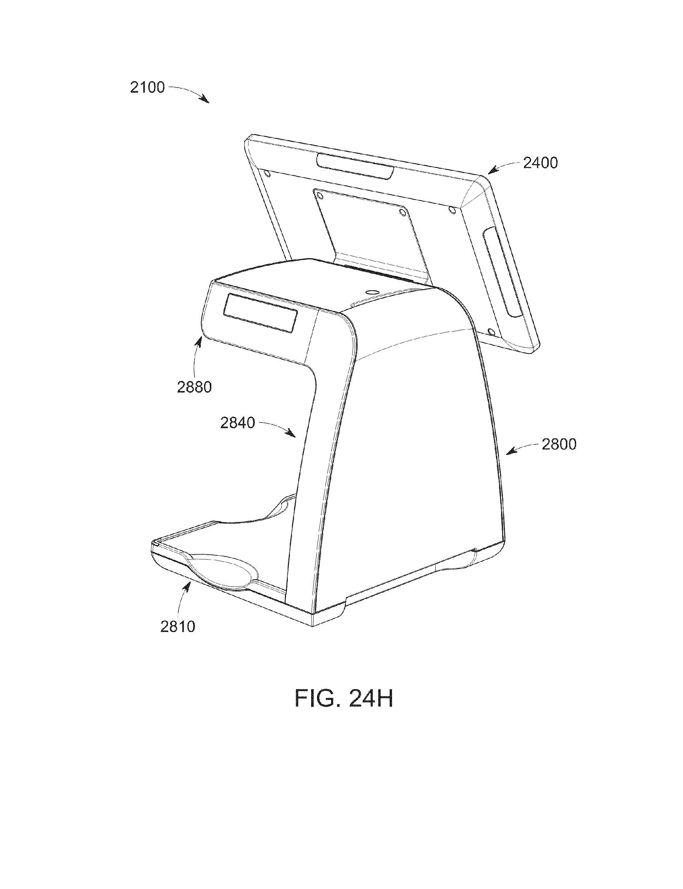

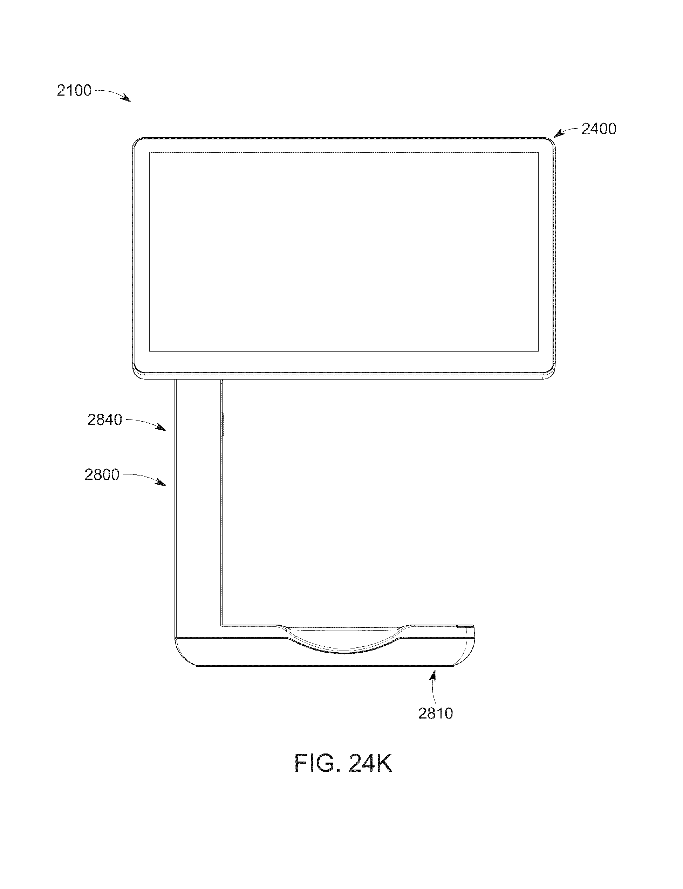

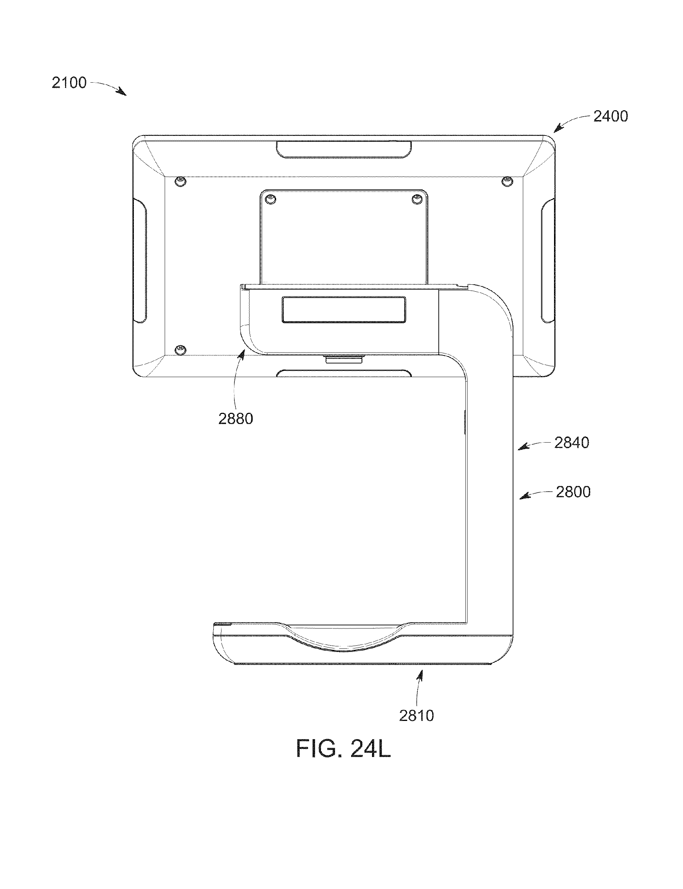

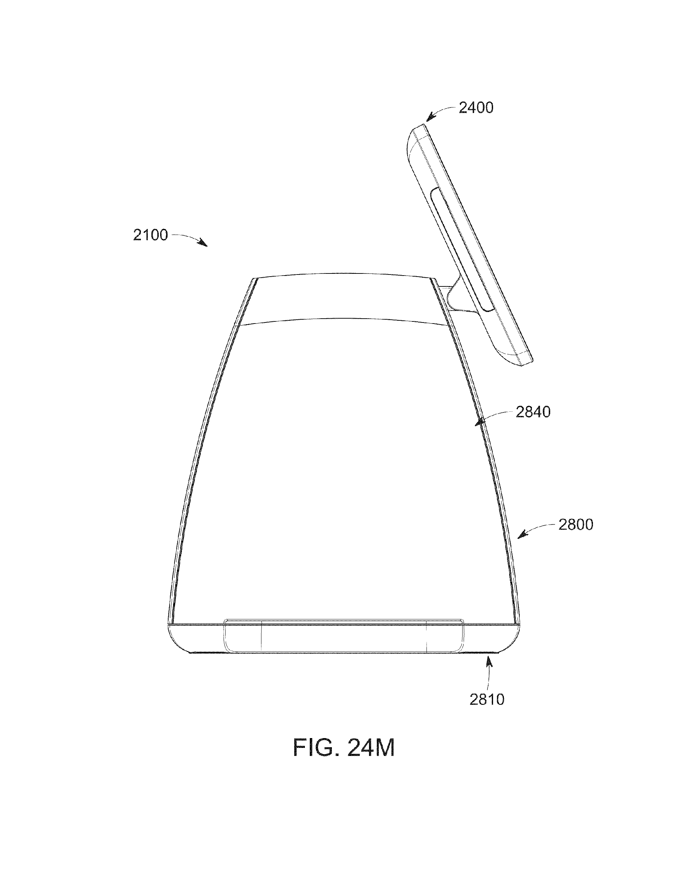

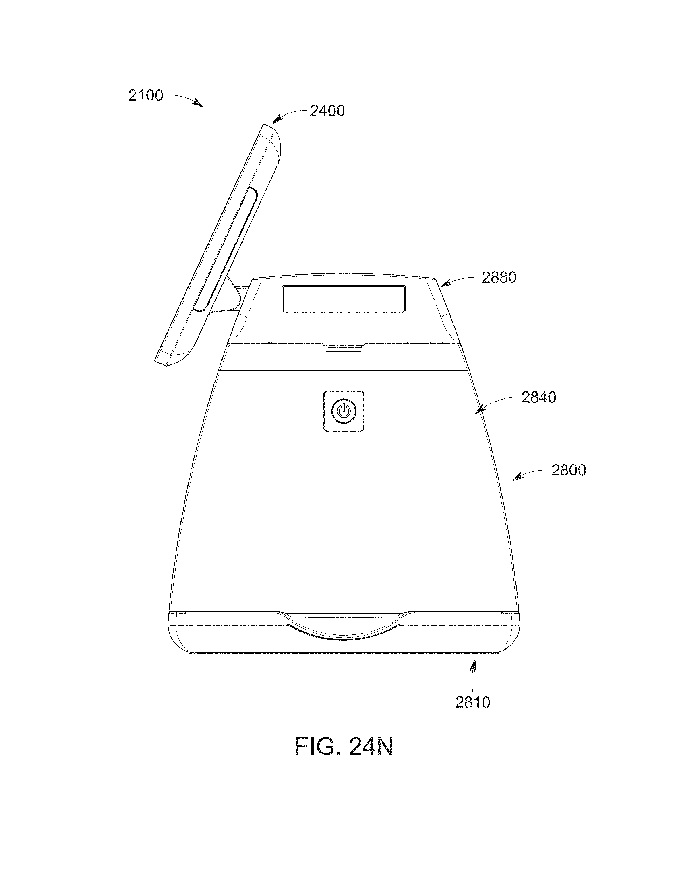

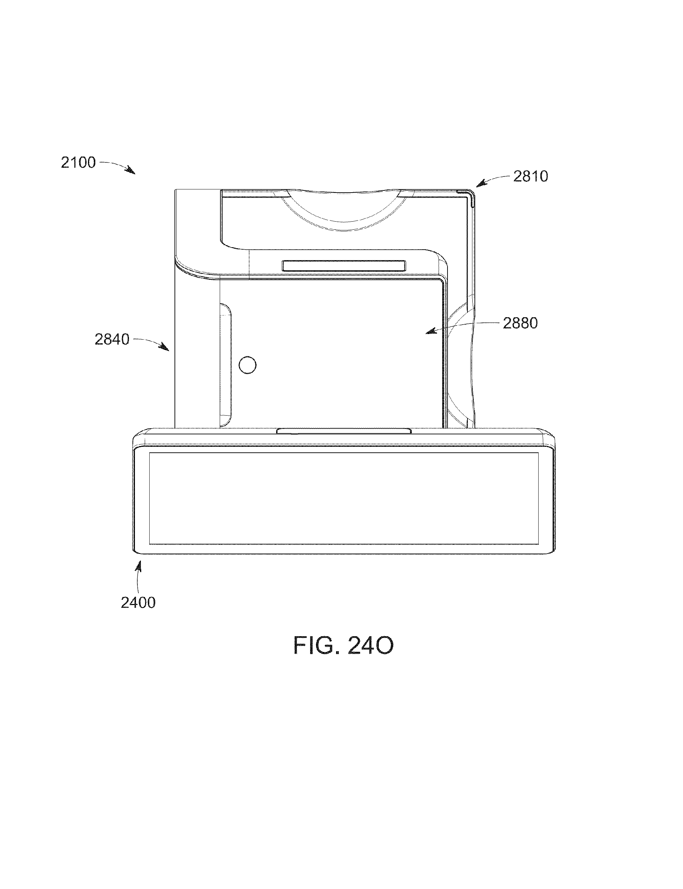

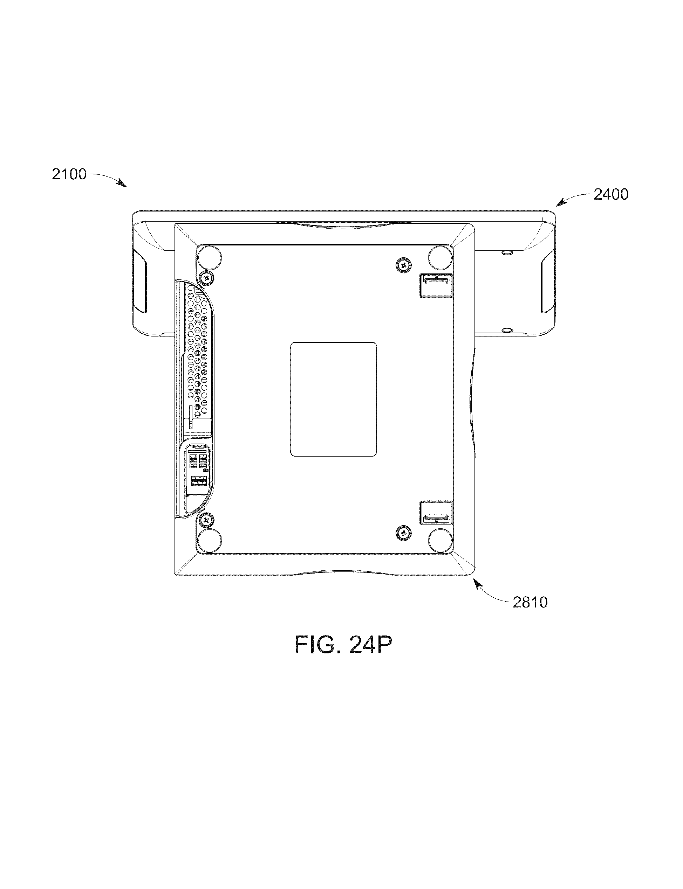

Figures 24A to 24P show an integrable modular lottery terminal 2100 including a reader 2800, a CPU unit 2200 positioned in the reader 2800, and a display device 2400 connectable to the reader (in any one of first, second, and third positions) in accordance with another example embodiment of the present disclosure. This example embodiment does not include a display device stand. In this example embodiment, the CPU unit 2200 is positioned in part of the reader 2800 and specifically the CPU unit 2200 is positioned in the camera unit supporter 2840 of the reader 2800. In this example embodiment, the camera unit 2880 is configured to support the display device 2400 facing in any of three different positions and respectively facing in three different directions with respect to the reader 2800. In other words, the display device 2400 is removably connectable to the reader 2800 in any of the three different positions, thus integrated with the reader 2800 in any one multiple different configurations as further described herein. These different configurations can thus account for operator preference, different amounts of space available on a support structure (not shown), and/or one or more other factors.

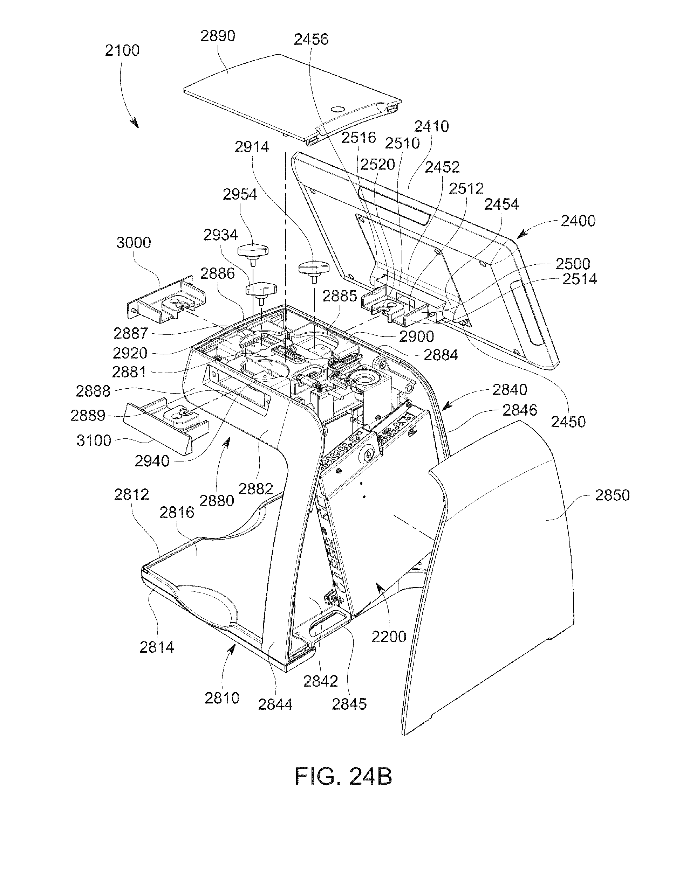

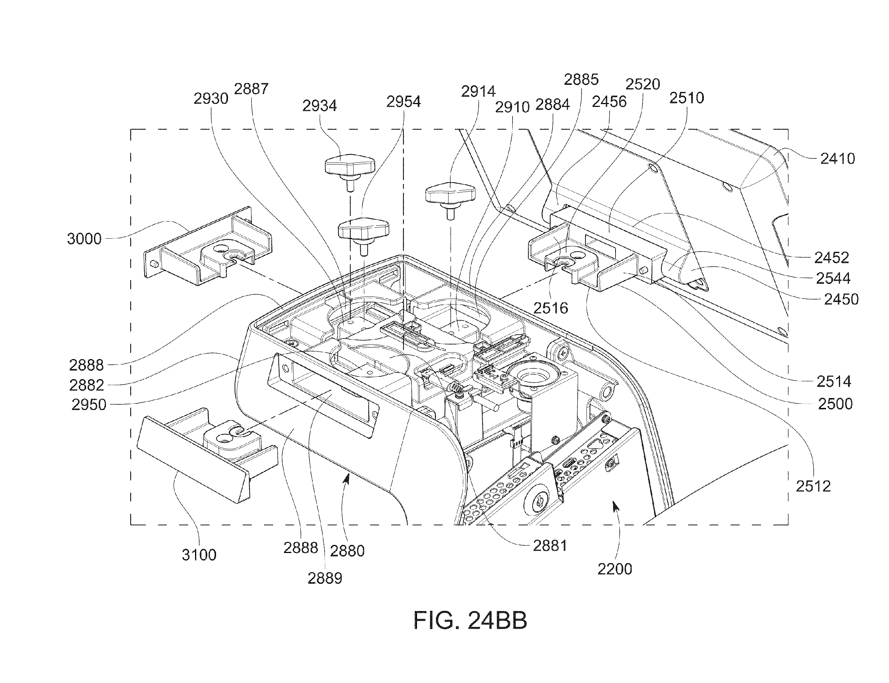

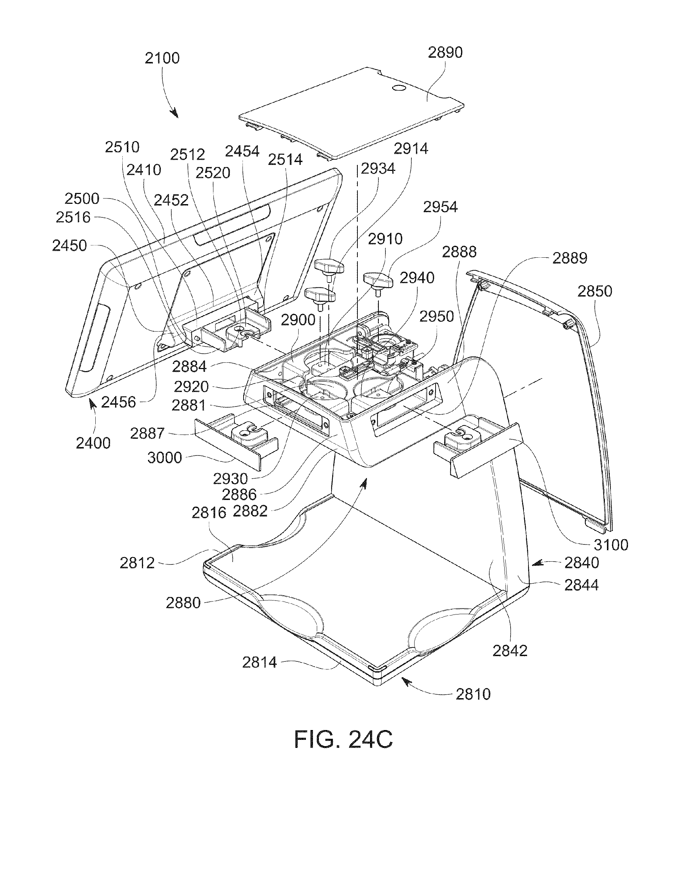

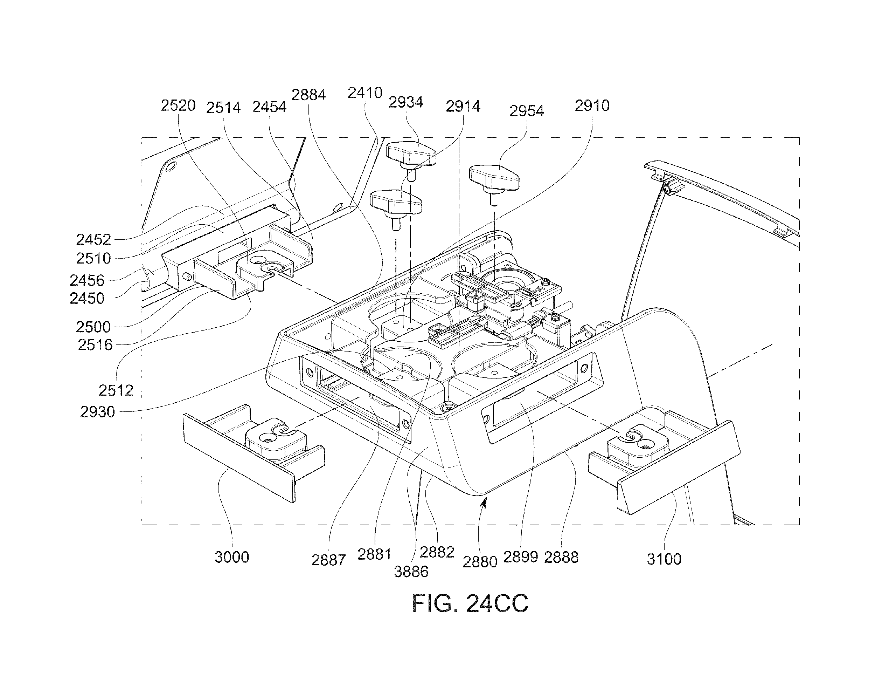

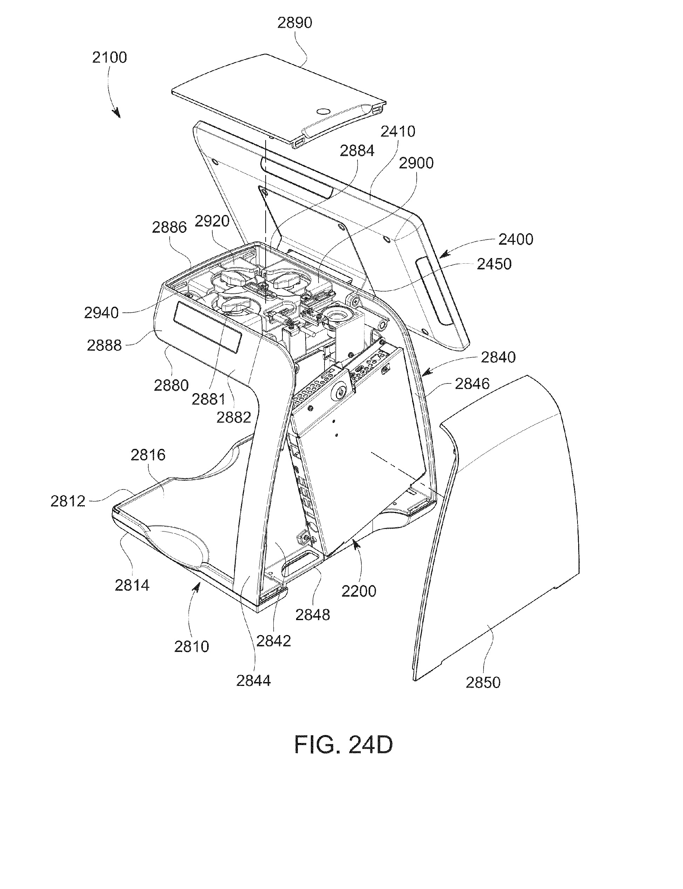

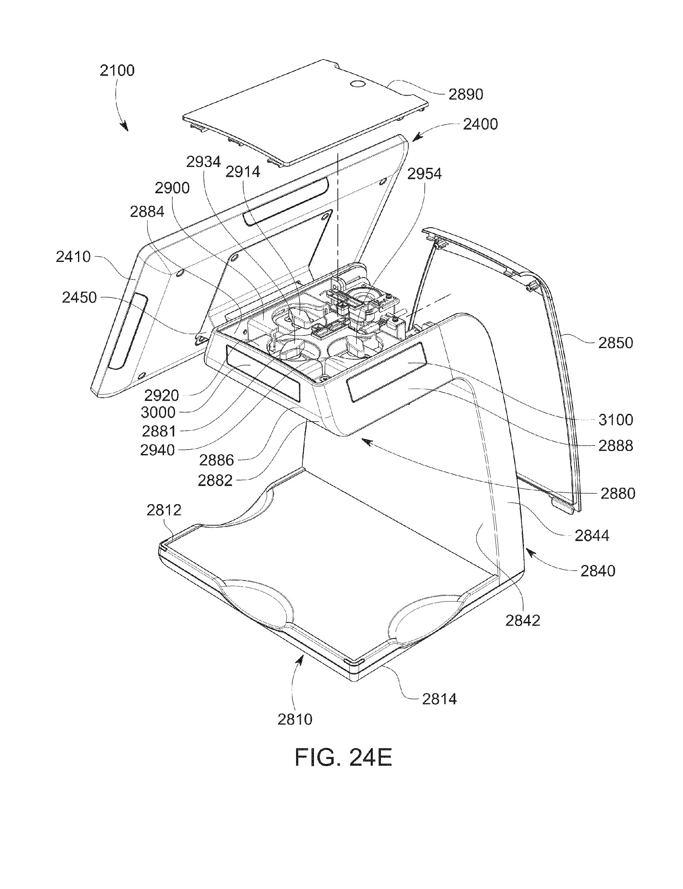

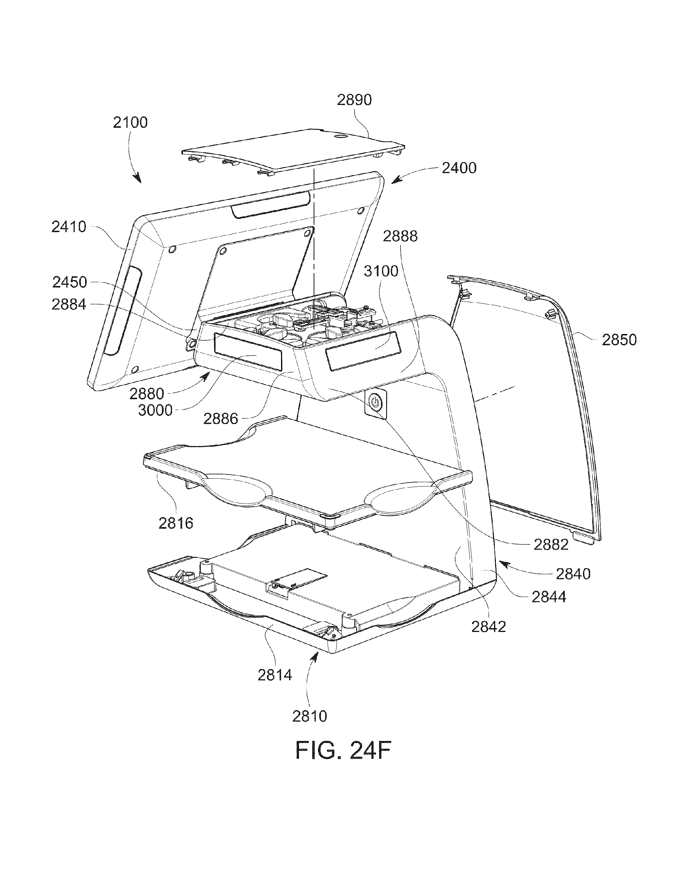

Figures 24A, 24B, 24BB, 24C, 24CC, 24D, 24E, and 24F show certain of the exterior and interior components of the integrable modular lottery terminal 2100 of this example embodiment including the components that are employed to removably connect the display device 2400 to the reader 2800 in any of the first, second, and third different positions.

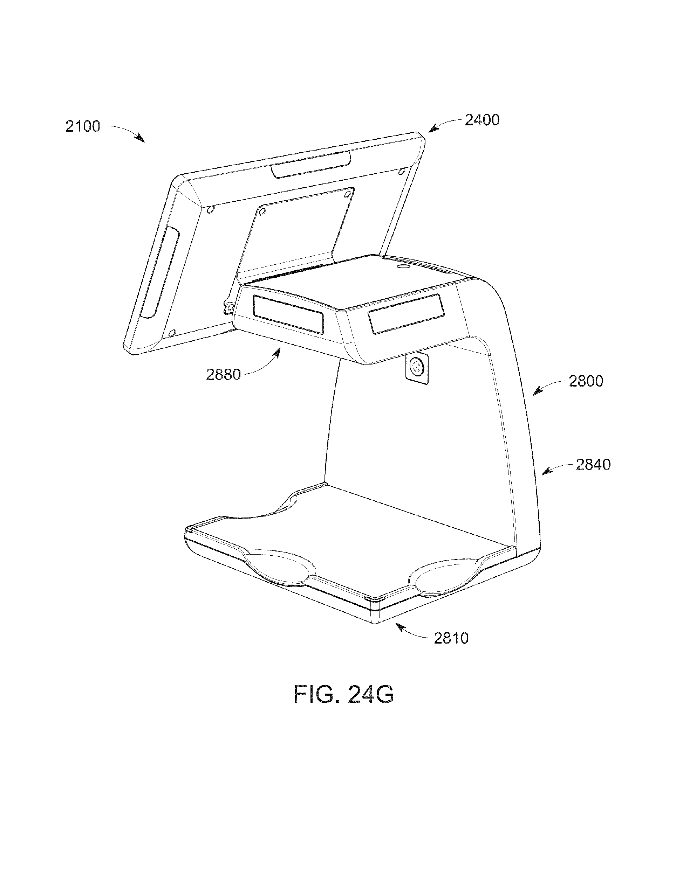

Figures 24G to 24P show the integrable modular lottery terminal 2100 of this example embodiment with the display device 2400 connected to the reader 2800 in a first configuration and in the first position.

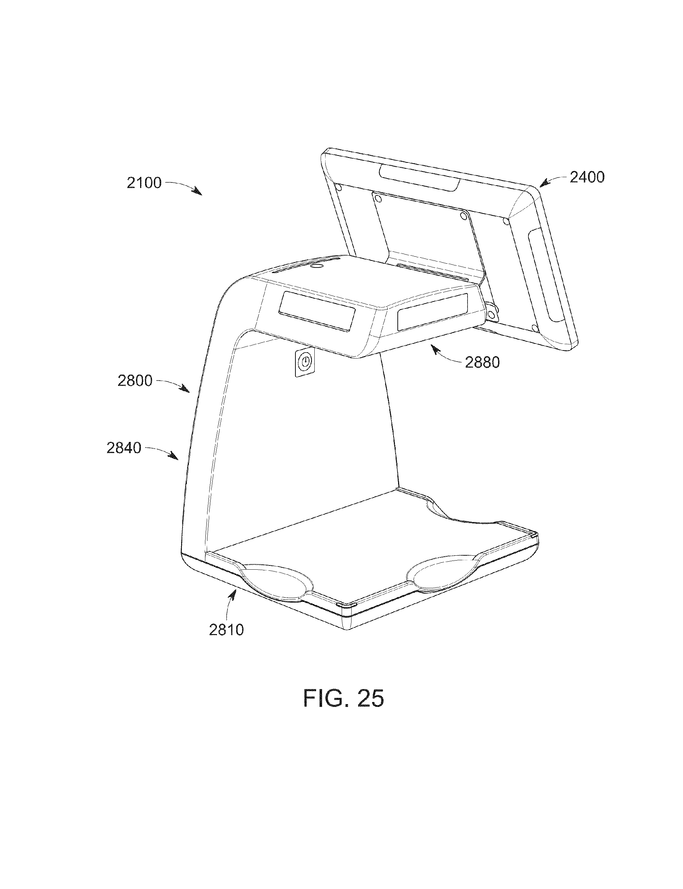

Figures 25 to 31 show the integrable modular lottery terminal 2100 of this example embodiment with the display device 2400 connected to the reader 2800 in other example configurations and in various positions.

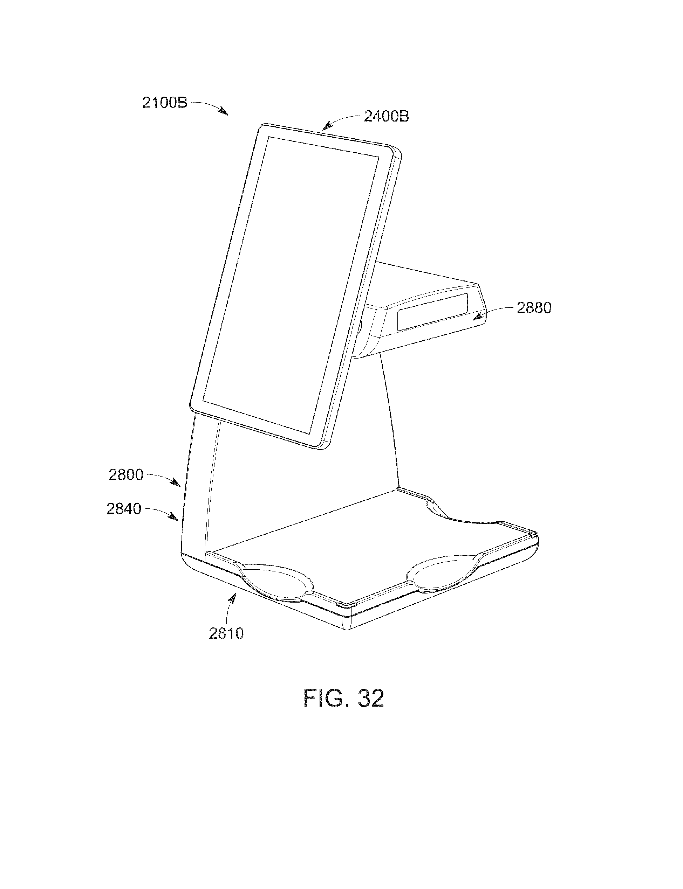

Figures 32 to 37 show the integrable modular lottery terminal 2100B of another example embodiment with an alternative display device 2400B connected to the reader 2800 in other example configurations and in various positions.

It should be appreciated that certain of the components described below are quick connection components that enable an installer (such as an operator) to easily and quickly position and connect the respective display device(s) to the reader in any of the three different positions and three different configurations such as further discussed below.

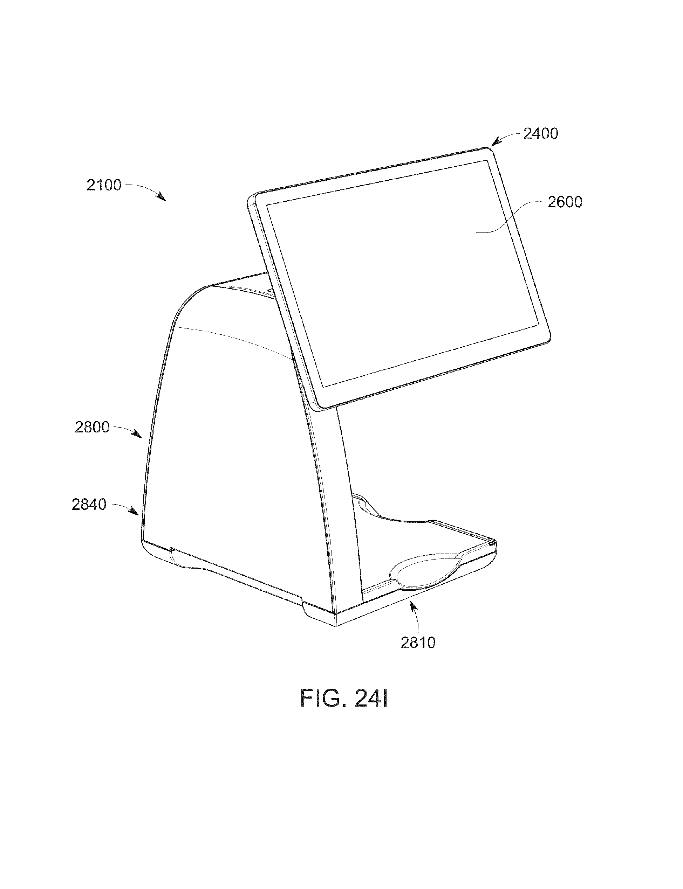

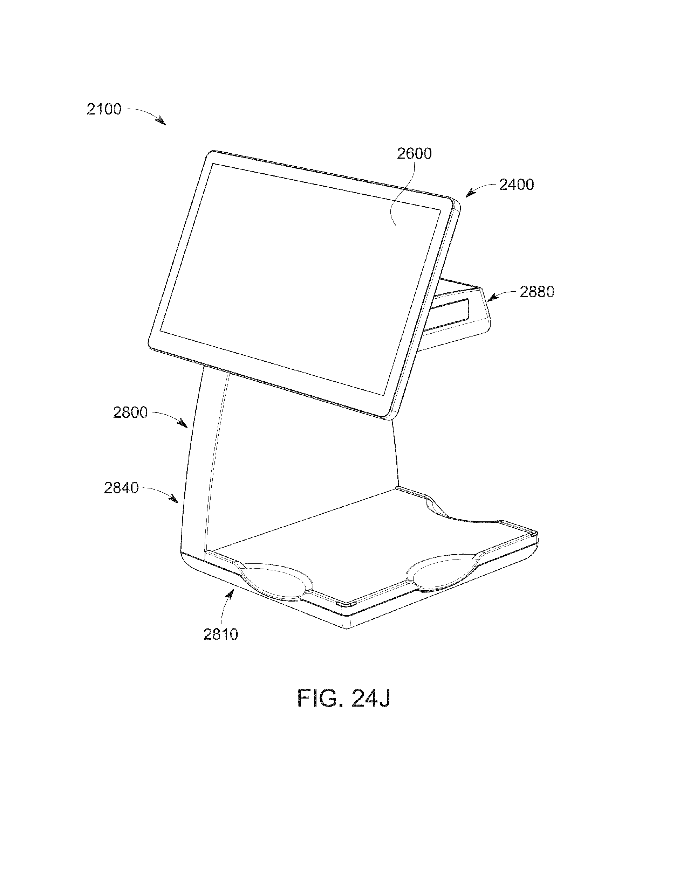

More specifically, as best shown in Figures 24A, 24B, 24BB, 24C, 24CC, 24D, 24E, and 24F, the display device 2400 includes a display device housing 2410, a connector arm support 2450 connected to a rear wall (not labeled) of the display device housing 2410, a connector arm 2500 connected to and extending rearwardly from the connector arm support 2450 (and thus from the display device housing 2410), a combination display screen and touch screen 2600 (such as shown in Figures 24I and 24J) within the display device housing 2410, and various other suitable components (not shown) that facilitate the operation of the display device 2400.

The display device 2400 includes a frame (not shown) inside the display device housing 2410 that supports the combination display screen and touch screen 2550.

The display device 2400 and particularly rear or bottom portion(s) of the display device housing 2410 include(s) one or more ports (not shown) that facilitate connection to one or more wires (not shown) that connect the display device 2400 to the CPU 2200.

The display device 2400 is configured to provide an operator interface via the combination display screen and touch screen 2600 that is configured to receive operator inputs. The display device 2400 and particularly the combination display screen and touch screen 2550 are communicatively connected (such as wirelessly or by a hard wire (not shown)) to the CPU unit 2200 to send signals to and to receive signals from the CPU unit 2200.

The connector arm 2500 extends from the connector arm support 2450 that is connected to the rear wall of the display device housing 2410 and is configured to support the display device 2400. The connector arm 2500 is configured to quickly and easily connect the display device 2400 to the reader 2800 as further described below.

The connector arm support 2450 includes a connector arm support base 2452 vertically slidably connected to the rear wall of the display device housing 2410 and spaced-apart mounting members 2454 and 2456 connected to the connector arm support base 2452 and extending rearwardly from the connector arm support base 2452. The mounting members 2454 and 2456 are configured to pivotably support an insertion member 2560 of the connector arm 2500. The slidable connection of the connector arm support base 2452 the rear wall of the display device housing 2410 enables the entire connector arm support 2450 and the connector arm 2500 to be slidably connected to the rear wall of the display device housing 2410. This configuration also enables the display device 2400 to be connected to the reader 2800 at different vertical positions such as further described below. This configuration also enables the connector arm 2500 to pivot relative to the display device housing 2410 and this enables the combination display screen and touch screen 2600 to pivot around a horizontal axis relative to the reader 2800 (to facilitate operator input).

The connector arm 2500 includes a pivot member 2510 pivotally connected to the spaced-apart mounting members 2454 and 2456 and extending rearwardly from the connector arm support base 2452.

The connector arm 2500 includes bottom, first side, a second side insertion members 2512, 2514, and 2516 connected to and extending rearwardly from the pivot member 2510.

The connector arm 2500 includes a connection hand 2520 connected to the bottom insertion member 2512 extending rearwardly from the bottom insertion member 2512. The connection hand 2520 includes a connection palm (not labeled) and two connection fingers (not labeled) connected to and extending rearwardly from the connection palm. The connection palm and the connection fingers define a central locking member receiving opening (not labeled).

The insertion members 2512, 2514, and 2516 and the connection hand 2520 are configured to be inserted into any of the connection arm receivers 2900, 2920, and 2940 of the camera unit 2880 of the reader 2800 to secure the connection arm 2500 and the entire display device 2400 to the reader 2800.

The connector arm 2500 is sized, shaped, and otherwise configured to be inserted into any of the three connector arm receivers 2900, 2920, and 2940 (described below) of the camera unit 2880 of the reader 2800 such that the camera unit 2880 of the reader 2800 supports the display device 2400.

The connector arm 2500 can be otherwise sized, shaped, and configured in accordance with the present disclosure. In other embodiments, the display device can include multiple connector arms in accordance with the present disclosure. Various different embodiments of the connector arm enable only landscape positions, enable only portrait positions, enable both landscape and portrait positions, is slidable, or is not slidable.

The reader 2800 includes a camera base 2810, a camera unit supporter 2840, and a camera unit 2880. The camera unit supporter 2840 is connected to and extends upwardly from the base 2810, and is connected to and supports the camera unit 2880. The camera unit supporter 2840 also houses the CPU unit 2200. In this example embodiment, the reader includes a camera. In other embodiments, the reader includes a scanning unit instead of a camera. In other embodiments, the reader includes a camera and a scanner. In other embodiments, the reader includes a combination camera and scanner. In other embodiments, the reader include one or more cameras. In other embodiments, the reader includes one or more scanners. It should be appreciated that the reader can thus include any of these embodiments.

The camera base 2810 is generally rectangular and includes a tray 2812 having a platen 2816 supported by a lower portion 2814.

The camera base 2810 includes a support connector (not shown) configured to facilitate connection with the camera unit supporter 2840.

The tray 2812 defines three access pockets (not labeled) that each enable an operator to lift a bet slip, a ticket, or other substrate that is resting on the platen 2816 from that platen 2816.

The base 2810 includes four compliant feet (not labeled) connected to the bottom of the lower portion 2814. These feet are configured to conform to the counter surface to prevent rocking and to absorb vibrations.

The camera base 2810 is of a sufficient size, shape, configuration, and weight to support the CPU unit 2200, the camera unit 2880, and the display device 2400 (or alternative or multiple display devices) such as described below.

The camera unit supporter 2840 is connected to the camera base 2810 at its bottom end (not labeled) and connected to the camera unit 2880 at its top end (not labeled).

The camera unit supporter 2840 includes a suitable base connector (now shown) configured to facilitate connection of the camera unit supporter 2840 to the reader base 2810.

The camera unit supporter 2840 includes a suitable camera unite connector (not shown) configured to facilitate connection of the camera unit supporter 2840 to the camera unit 2880.

The camera unit supporter 2840 includes a camera unit supporter housing (not labeled) that includes: (1) an inner wall 2842; (2) a first side wall 2844 connected to the inner wall 2842; (3) a second side wall 2846 connected to the inner wall 2842; (4) a bottom wall 2848 connected to the inner wall 2842; and (5) a removable outer wall 2850 suitably connectable to the inner wall 2842.

The camera unit supporter housing defines an interior area (not labeled) configured to contain the CPU unit 2200 as best shown in Figures 24B and 24D. The camera unit supporter housing can be alternatively configured to support and house the CPU unit 2200 (or an alternatively configured CPU unit).

The bottom wall 2848 includes one or more openings (not labeled) for wires (not shown) to be connected to the CPU unite 2200.

The outer wall 2850 is removable to enable the CPU unit 2200 to be positioned in the camera unit supporter housing and to otherwise provide access to the CPU unit 2200.

The CPU unit 2200 includes a CPU housing (not labeled), a frame (not shown or labeled) inside the housing, and CPU components (not shown) inside of the CPU housing and supported by the frame. The CPU unit 2200 includes suitable electrical connectors (not shown). These electrical connectors can include a power cord electrical connector, a display device electrical connector, a camera electrical connector, a printer electrical connector, and one or more data network connectors. The CPU unit 2200 includes multiple internal electronic components including but not limited to a processing device (or devices) communicatively connected to a memory device (or devices). For instance, the CPU unit 2200 can include a programmable logic controller. The processing device can include any suitable processing device such as, but not limited to, a general-purpose processor, a special-purpose processor, a digital-signal processor, one or more microprocessors, one or more microprocessors in association with a digital-signal processor core, one or more application-specific integrated circuits, one or more field-programmable gate array circuits, one or more integrated circuits, and/or a state machine. The memory device can include any suitable memory device such as, but not limited to, read-only memory, random-access memory, one or more digital registers, cache memory, one or more semiconductor memory devices, or magnetic media such as integrated hard disks and/or removable memory. The memory device stores instructions executable by the processing device to control operation of the integrable modular lottery terminal 2100. The CPU unit 2200 can be communicatively and operably connected to each display device 2400, the camera 2881 of the camera unit 2880 of the reader 2800, a lottery ticket printer (not shown), a handheld scanner (not shown), and a lottery ticket central system (not shown), and configured to receive signals from and send signals to those components. The CPU unit can be communicatively connectable (such as via Wi-Fi, Bluetooth, near-field communication, or other suitable wireless communications protocol) to such devices.

The camera unit 2880 is connected to and extends transversely from the camera unit supporter 2840 over part of and spaced above the camera base 2810. The camera unit 2880 includes a scanner housing 2882, a camera 2881 in the camera housing 2882 and in a downward facing position, and one or more lights (not shown) in the camera housing 2882 in a downward facing position. In various embodiments, the camera base can include LED lighting to provide operator feedback as to the state of the terminal and to the success of the current transaction. The reader can also include other optional electronic indicators or components to support the requirements desired.

The camera unit 2880 and specifically the camera 2881 is configured to take digital images of: (1) paper play slips positioned on or above the reader base 2810; (2) barcodes that are associated with digital play slips positioned on or above the camera base 2810; (3) QR codes that are associated with digital play slips positioned on or above the camera base 2810; (4) barcodes that are associated with lottery tickets positioned on or above the camera base 2810; and/or (5) QR codes that are associated with lottery tickets positioned on or above the camera base 2810. The camera unit 2880 can additionally be configured to take images (such as digital images) of other documents or objects. In various embodiments, the camera unit 2880 and specifically the camera 2881 is configured to read codes such as bar codes or QR codes on lottery tickets play slips to enable the purchase of draw lottery tickets via the integrable modular lottery terminal 2100. In various embodiments, the camera unit 2880 and specifically the camera 2881 is configured to read codes such as bar codes or QR codes on lottery tickets (such as on draw lottery tickets or instant lottery tickets) positioned on or above the camera base 2810 for redemption purposes. The camera 2881 is not further described herein for brevity and since various cameras that can be employed are well known in the lottery industry. It should be appreciated that the camera unit 2880 can include one or more digital cameras that function(s) as scanners.

The camera housing 2882 includes: (1) a bottom wall (not shown); (2) a first side wall 2884 connected to and extending upwardly from the bottom wall; (3) a second side wall 2886 connected to and extending upwardly from the bottom wall and connected to the first side wall 2884; (4) a third side wall 2888 connected to and extending upwardly from the bottom wall and connected to the second side wall 2886; and (5) a removable top wall 2890 suitably connectable to the first, second, and third side walls 2884, 2886, and 2888. The camera housing 2882 defines an interior area (not labeled) that contains the camera 2881, the lights, and the components (described below) that facilitate connection with the one or more display devices such as display device 2400.

The first side wall 2884 includes various sections (not labeled) that define a first connector arm receiver slot 2885 configured to receive a connector arm 2500 of the display device 2400 or a connector arm plug (described below). In this example embodiment, the first connector arm receiving slot 2885 is rectangular in shape but can vary in accordance with the present disclosure.

The second side wall 2886 includes various sections (not labeled) that define a second connector arm receiver slot 2887 configured to receive a connector arm 2500 of the display device 2400 or a connector arm plug (described below). In this example embodiment, the second connector arm receiving slot 2887 is rectangular in shape but can vary in accordance with the present disclosure.

The third side wall 2888 includes various sections (not labeled) that define a third connector arm receiver slot 2889 configured to receive the connector arm 2500 of the display device 2400 or a connector arm plug (described below). In this example embodiment, the connector arm receiving slot 2895 is rectangular in shape but can vary in accordance with the present disclosure.

The camera unit 2880 includes first, second and third connector arm receivers 2900, 2920, and 2940, respectively, that are each configured to receive and securely hold the connector arm 2500 of the display device 2400 and thus the entire display device 2400 as further described below. The connector arm receivers 2900, 2920, and 2940 are each configured to support the display device 2400 in a different direction, and thus the multiple connector arm receivers 2900, 2920, and 2940 can support the display device 2400 in any of the three different directions.

The first connector arm receiver 2900 includes top, bottom, and side walls (not labeled) that are connected to and that extend inwardly from the first side wall 2884 and that define the first connector arm receiver slot 2885. The first connector arm receiver 2900 includes a first locking base 2910. The first locking base 2910 is configured to receive part of a first locking key 2914. The first locking key 2914 is configured to secure the hand 2520 to the first locking base 2910.

The second connector arm receiver 2920 includes top, bottom, and side walls (not labeled) that are connected to and that extend inwardly from the second side wall 2886 and that define the second connector arm receiver slot 2887. The second connector arm receiver 2920 includes a second locking base 2930. The second locking base 2930 is configured to receive part of the second locking key 2934. The second locking key 2934 is configured to secure the hand 2520 to the second locking base 2930.

The third connector arm receiver 2940 includes top, bottom, and side walls (not labeled) that are connected to and that extend inwardly from and that define the third connector arm receiver slot 2889. The third connector arm receiver 2940 includes a third locking base 2950. The third locking base 2950 is configured to receive part of a third locking key 2954. The third locking key 2954 is configured to secure the hand 2520 to connectable to the third locking base 2950.

The camera unit 2880 is configured to receive one or more connector arm plugs 3000 and 3100 that are configured to plug the connector arm receivers 2900, 2920, and 2940 that are not used to support the display device 2400. Each of the plugs 3000 and 3100 includes bottom, first side, and a second side insertion members (not labeled) connected to and extending rearwardly from the outer plate (not labeled). Each of the plugs 3000 and 3100 each also include a connection hand (not labeled) connected to the bottom insertion member and extending rearwardly from the bottom insertion member. The connection hand includes a connection palm (not labeled) and two connection fingers (not labeled) connected to and extending rearwardly from the connection palm. The connection fingers define a central locking member receiving opening (not labeled). The insertion members and the connection hand are configured to be inserted into any of the connection arm receivers of the camera unit 2880 to close those connection arm receivers when not in use.

The integrable modular lottery terminal 2100 can include one or more speakers and antennas as required for optional capabilities.

The integrable modular lottery terminal 2100 also includes one or more suitable power supply cords (not shown) and other electrical cords (not shown) that are connectable to the CPU unit 2200, the display device 2400, and the reader 2800, and that enable such devices to obtain electric power from a suitable power supply and/or communicate with each other. The power supply is electrically connected to (via suitable wiring and other components) and configured to power several components of the integrable modular lottery terminal 2100. The power supply can be any suitable electric power supply. The integrable modular lottery terminal 2100 can include various other suitable components (not shown) that facilitate the operation of the lottery terminal 2100 such as but not limited to a lottery ticket printer (not shown) and/or a handheld scanner (not shown).

It should be appreciated that in this example embodiment, the display device 2400 is pivotal about a horizontal axis relative to the camera housing via a pivot components described above of the display device 2400.

Figure 25 shows the integrable modular lottery terminal 2100 in a second configuration where the display device 2400 is connected to the reader 2800 in another position.

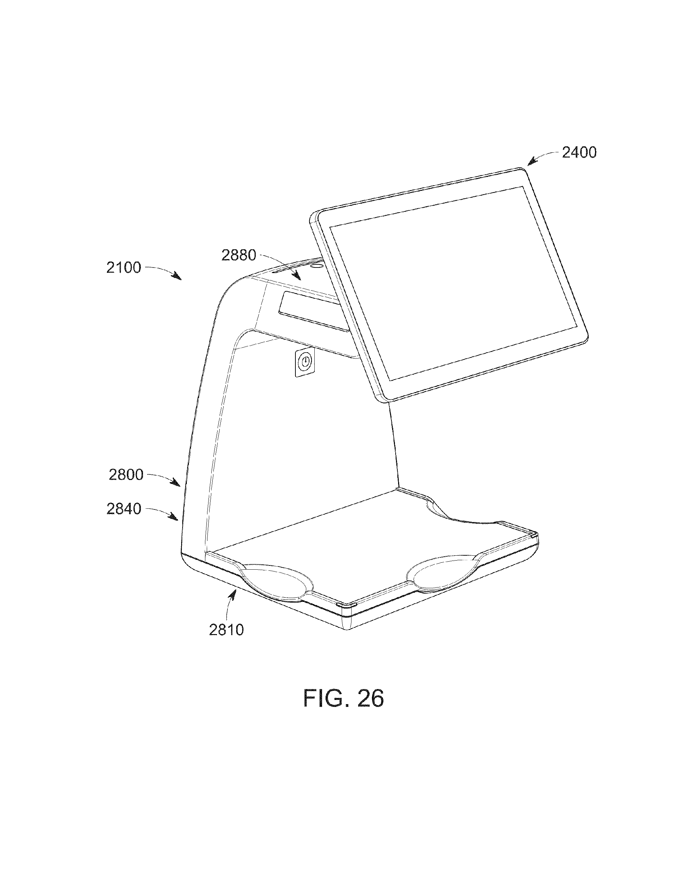

Figure 26 shows the integrable modular lottery terminal 2100 in a third configuration where the display device 2400 is connected to the reader 2800 in another position.

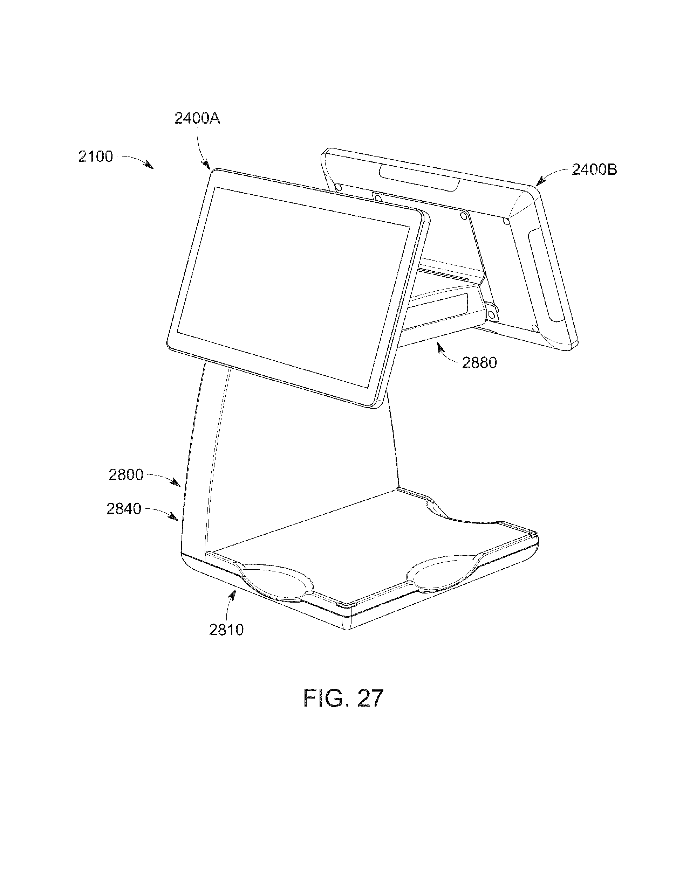

Figure 27 shows the integrable modular lottery terminal 2100 with two display devices 2400A and 2400B in a fourth configuration where the first display device 2400A is connected to the reader in a first position and the second display device 2400B is connected to the reader in a second position.

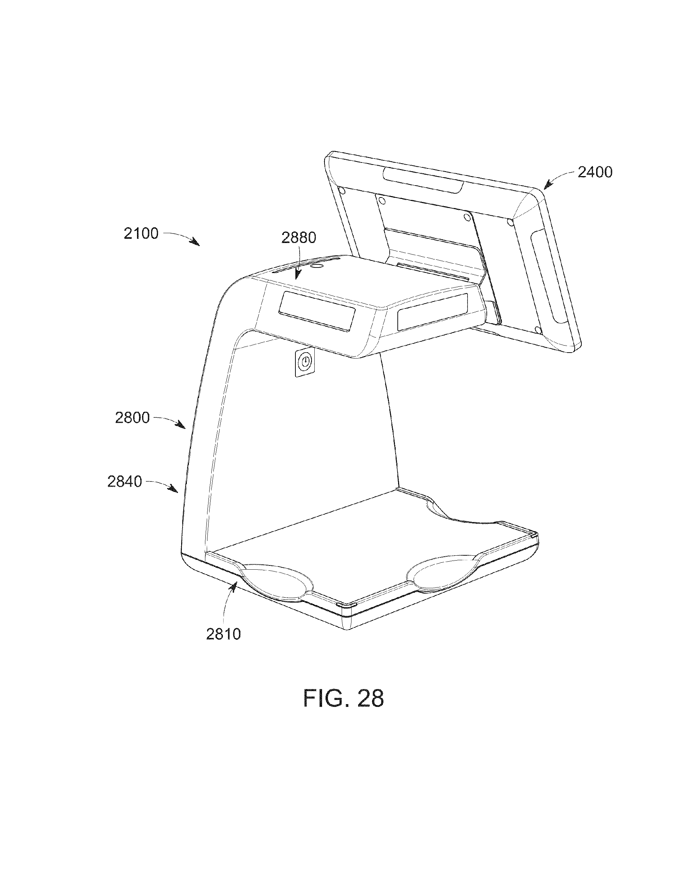

Figure 28 shows the integrable modular lottery terminal 2100 in a fifth configuration where the display device 2400 is connected to the reader 2800 in the second position, and at another position relative to the reader 2800.

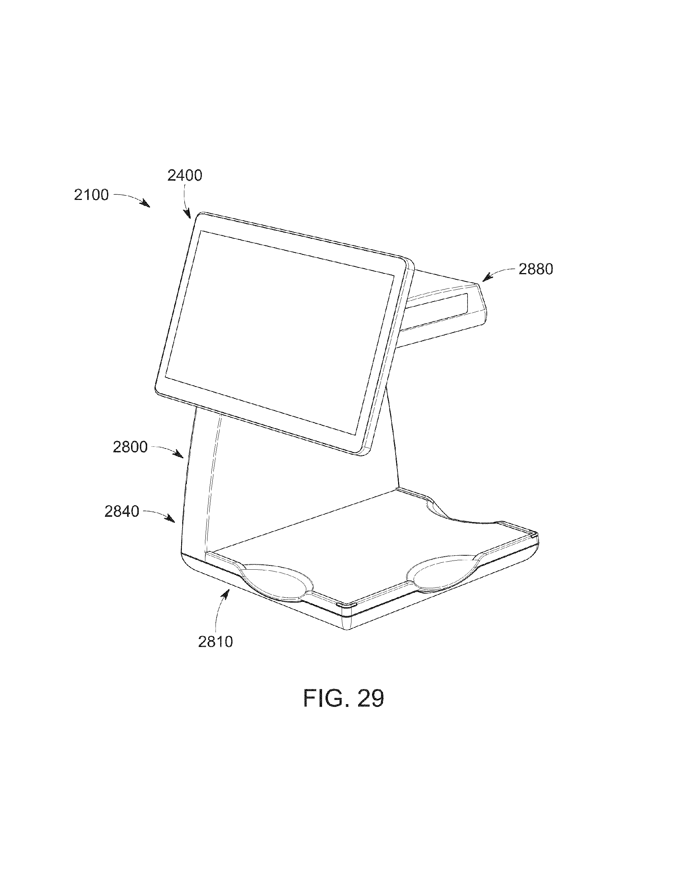

Figure 29 shows the integrable modular lottery terminal 2100 in a sixth configuration where the display device 2400 is connected to the reader 2800 in the first position, and at a first vertically lower position relative to the reader.

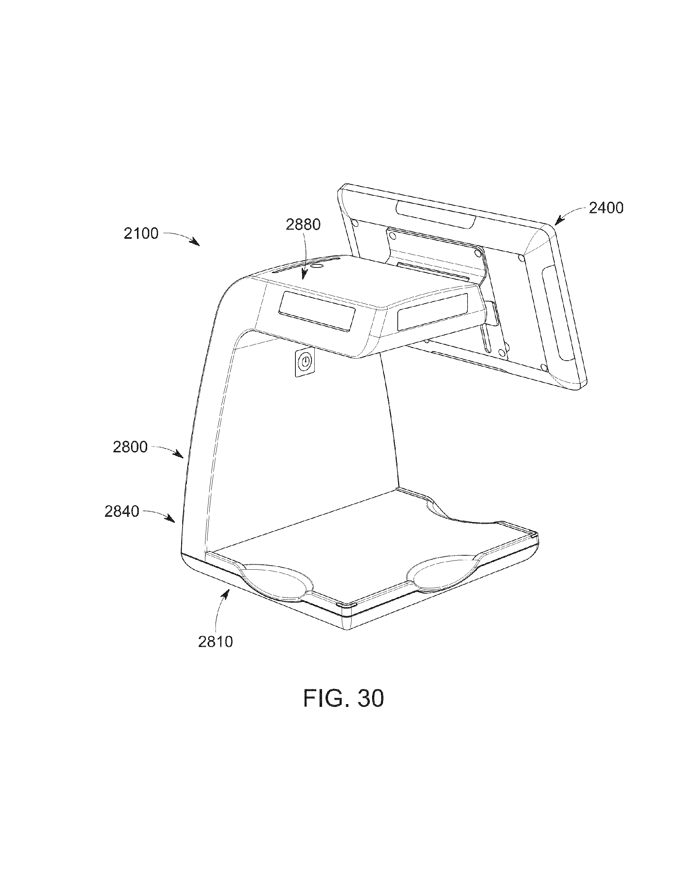

Figure 30 shows the integrable modular lottery terminal 2100 in a seventh configuration where the display device 2400 is connected to the reader 2800 in the second position, and at a second vertically lower position relative to the reader 2800.

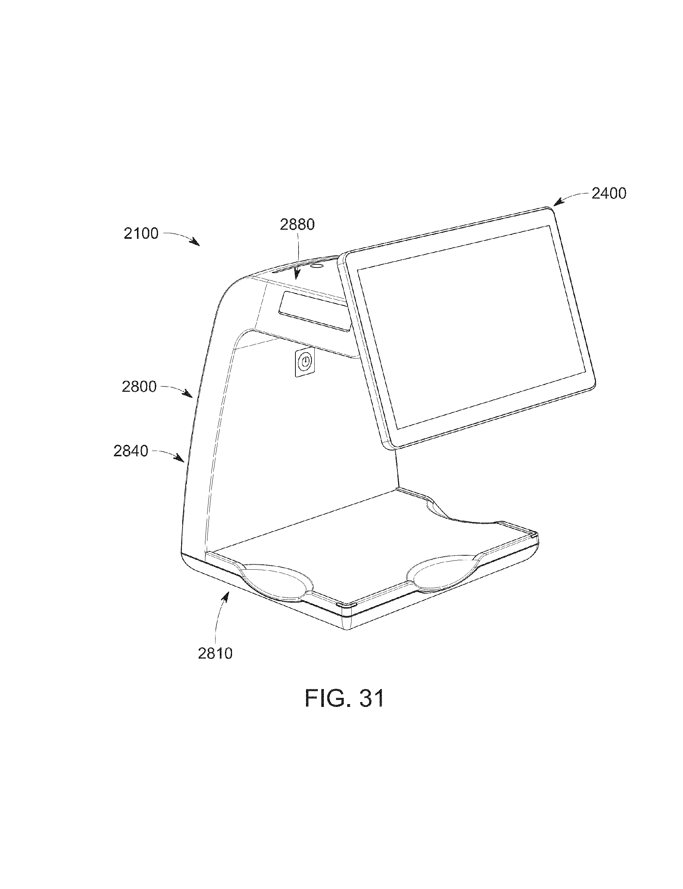

Figure 31 shows the integrable modular lottery terminal 2100 in an eighth configuration where the display device 2400 is connected to the reader in the third position, and at a second vertically lower position relative to the reader 2800.

Figure 32 shows an alternative integrable modular lottery terminal 2100B in a ninth configuration where an alternative display device 2400B is connected to the reader 2800 in the first position.

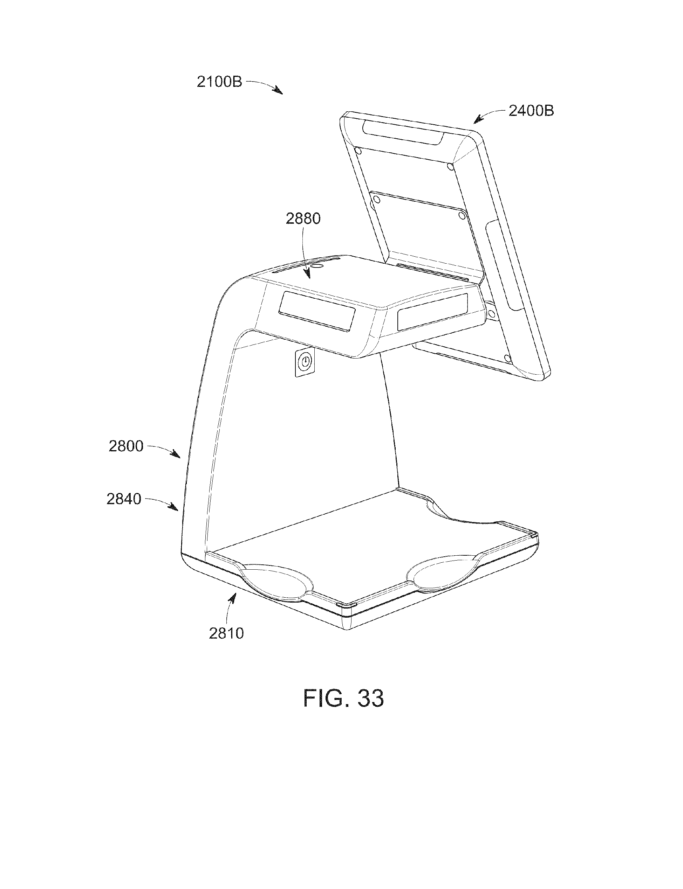

Figure 33 shows the integrable modular lottery terminal 2100B in a tenth configuration where the alternative display device 2400B is connected to the reader in the second position.

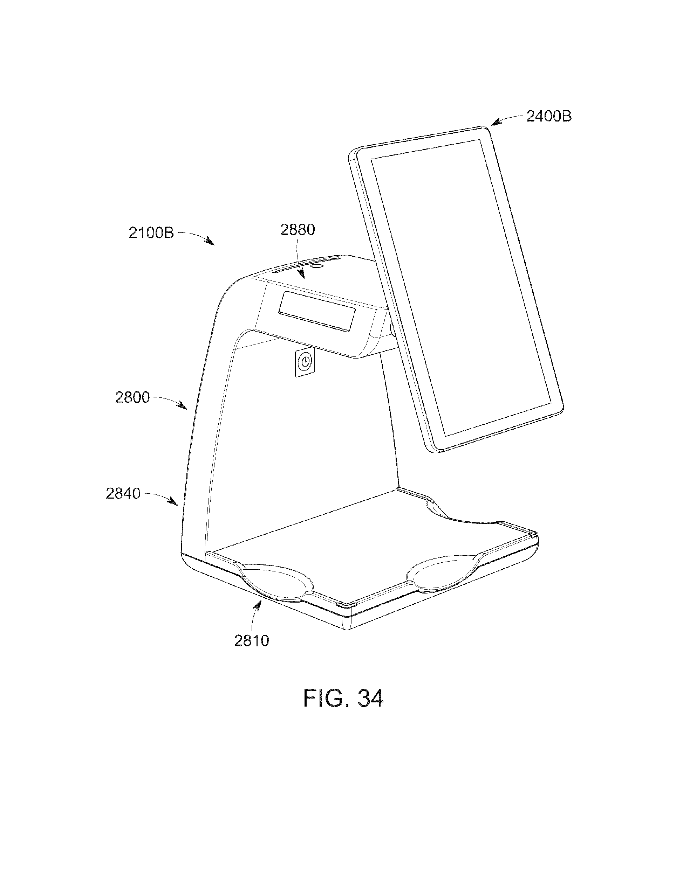

Figure 34 shows the integrable modular lottery terminal 2100B in an eleventh configuration where the alternative display device 2400B is connected to the reader 2800 in the third position.

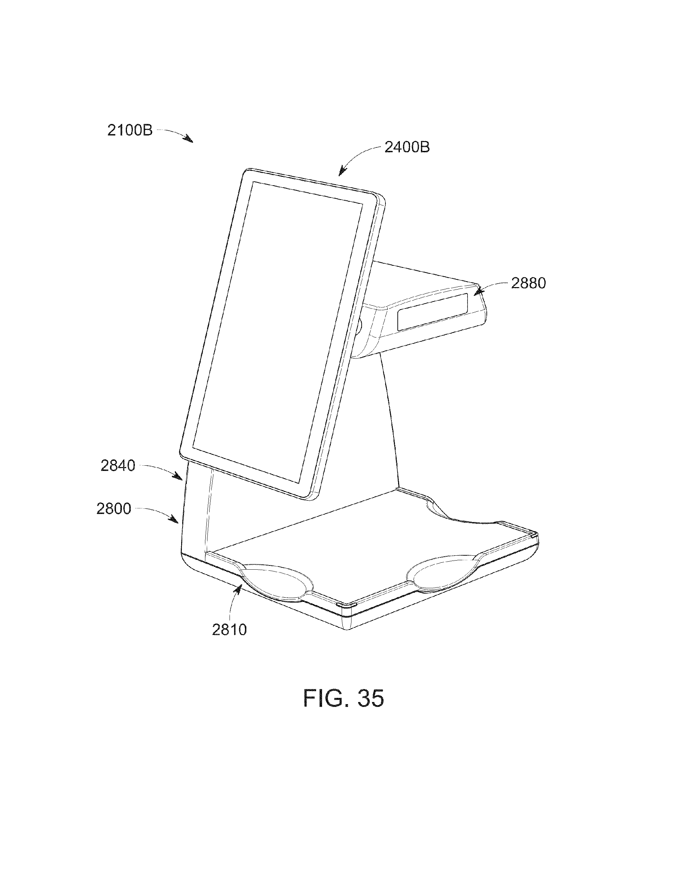

Figure 35 shows the integrable modular lottery terminal 2100B in a twelfth configuration where the alternative display device 2400B is connected to the reader 2800 in the first position, and at a vertically lower position relative to the reader 2800.

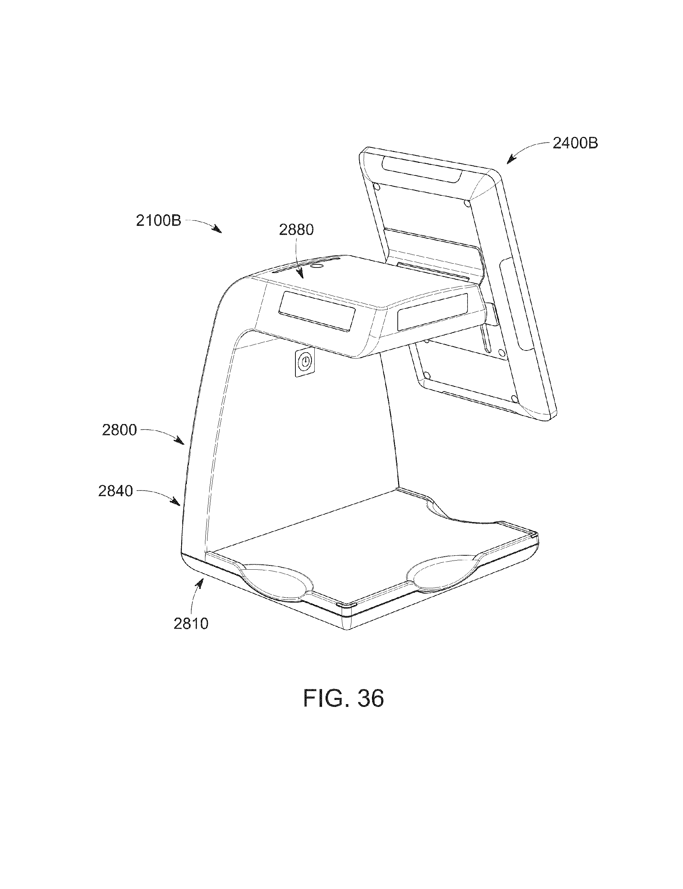

Figure 36 shows the integrable modular lottery terminal 2100B in a thirteenth configuration where the alternative display device 2400B is connected to the reader 2800 in the second position, and at a vertically lower position relative to the reader 2800.

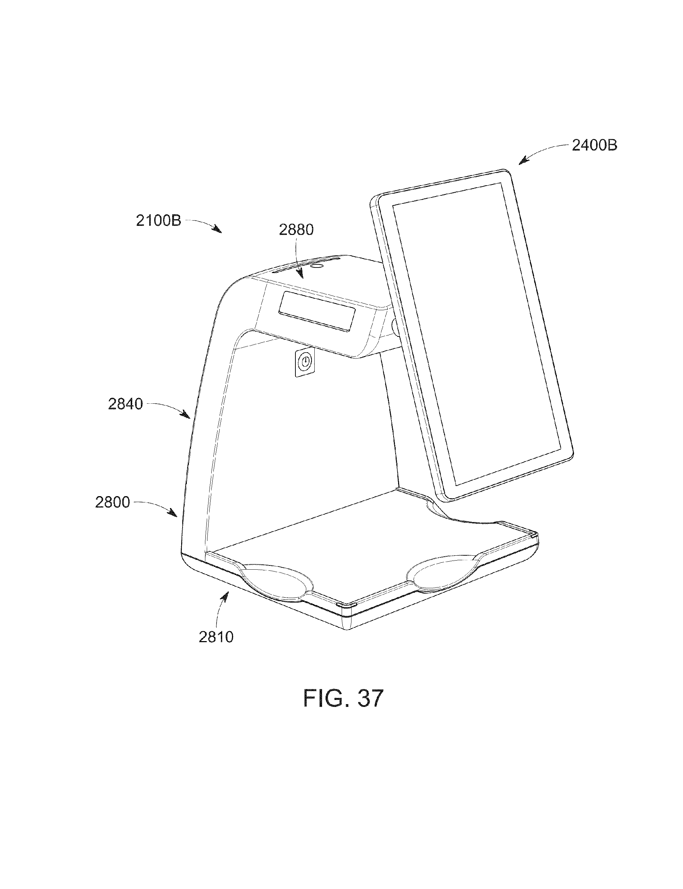

Figure 37 shows the integrable modular lottery terminal 2100B in a fourteenth configuration where the alternative display device 2400B is connected to the reader 2800 in the third position, and at a vertically lower position relative to the reader 2800.

It should be appreciated that the display devices are configured for tool-less reconfiguration to each of the three sides available, or can alternatively require a tool for this reconfiguration.

It should be appreciated from the above that various embodiments of the present disclosure provide an integrable modular lottery terminal comprising: (1) a CPU unit; (2) a display device comprising a display device housing and a connector arm extending from the display device housing; and (3) a reader comprising a base, a camera unit supporter, and a camera unit, wherein: (a) the camera unit supporter comprises a housing that houses the CPU unit, (b) the camera unit comprises a camera housing that houses a camera, and (c) the camera unit comprises a first connector arm receiver configured to receive and securely hold the connector arm of the display device such that the display device faces a first direction. In various such embodiments, the first connector arm receiver comprises an interior surface that defines a connector arm receiving slot sized and shaped to receive the connector arm of the display device. In various such embodiments, the camera housing comprises a second multiple connector arm receiver configured to receive and securely hold the connector arm of the display device such that the display device faces a second direction that is opposite the first direction. In various such embodiments, the camera housing comprises a second multiple connector arm receiver configured to receive and securely hold the connector arm of the display device such that the display device faces a second direction that is transverse to the first direction. In various such embodiments, the camera housing comprises a third multiple connector arm receiver configured to receive and securely hold the connector arm of the display device such that the display device faces a third direction that is opposite the first direction. In various such embodiments, the camera housing comprises multiple connector arm receivers facing in different directions such that the connector arm of the display device can be connected to the camera unit such that the display device faces one of the different directions. In various such embodiments, the connector arm comprises a connector arm support including a connector arm support base vertically slidably connected to a rear wall of the display device housing, spaced-apart mounting members connected to the connector arm support base, and an insertion member pivotably supported by the mounting members. In various such embodiments, the connector arm comprises a connection hand connected to the insertion member. In various such embodiments, the connection hand comprises a connection palm and two connection fingers connected to and extending rearwardly from the connection palm, wherein the connection fingers define a central locking member receiving opening. In various such embodiments, the first connector arm receiver comprises top, bottom, and side walls that define the connector arm receiver slot. In various such embodiments, the first connector arm receiver comprises a locking base configured to receive part of a locking key configured to secure the connector arm to the locking base.

It should further be appreciated from the above that various embodiments of the present disclosure provide an integrable modular lottery terminal comprising: (1) a CPU unit; (2) a display device comprising a display device housing and a connector arm extending from the display device housing; and (3) a reader comprising a base, a camera unit supporter, and a camera unit, wherein: (a) the camera unit comprises a camera housing that houses a camera, and (b) the camera unit comprises a first connector arm receiver extending inwardly from a first side wall of the camera unit, a second connector arm receiver extending inwardly from a second side wall of the camera unit, and a third connector arm receiver extending inwardly from a third side wall of the camera unit, each of the first, second, and third connector arm receivers configured to receive and securely hold the connector arm of the display device. In various such embodiments, the connector arm comprises a connector arm support including a connector arm support base connected to a rear wall of the display device housing, spaced-apart mounting members connected to the connector arm support base, and an insertion member pivotably supported by the mounting members. In various such embodiments, the connector arm comprises a connection hand connected to the insertion member. In various such embodiments, the connection hand comprises a connection palm and two connection fingers connected to and extending rearwardly from the connection palm, wherein the connection fingers define a central locking member receiving opening.

It should further be appreciated from the above that various embodiments of the present disclosure provide an integrable modular lottery terminal comprising: (1) a CPU unit; (2) a display device comprising a display device housing and a connector arm extending from the display device housing, wherein the connector arm comprises a connector arm support including a connector arm support base connected to a rear wall of the display device housing, spaced-apart mounting members connected to the connector arm support base, and an insertion member pivotably supported by the mounting members; and (3) a reader comprising a base supporting a camera unit supporter that supports a camera unit, wherein: (a) the camera unit comprises a camera housing that houses a camera, and (b) the camera unit comprises a connector arm receiver configured to receive and securely hold the connector arm of the display device such that the display device faces a first direction. In various such embodiments, the connector arm comprises a connection hand connected to the insertion member, wherein the connection hand comprises a connection palm and two connection fingers connected to and extending rearwardly from the connection palm, wherein the connection fingers define a central locking member receiving opening. In various such embodiments, the connector arm receiver comprises an interior surface that defines a connector arm receiving slot sized and shaped to receive the connector arm of the display device. In various such embodiments, the connector arm receiver comprises top, bottom, and side walls that define the connector arm receiver slot. In various such embodiments, the connector arm receiver comprises a locking base configured to receive part of a locking key configured to secure the connector arm to the locking base.

Various changes and modifications to the present embodiments described herein will be apparent to those skilled in the art. Such changes and modifications can be made without departing from the spirit and scope of the present subject matter and without diminishing its intended technical scope. It is therefore intended that such changes and modifications be covered by the appended claims.

## Claims

1. An integrable modular lottery terminal comprising:
a CPU unit;
a display device comprising a display device housing and a connector arm extending from the display device housing; and
a reader comprising a base, a camera unit supporter, and a camera unit, wherein:
the camera unit supporter comprises a housing that houses the CPU unit,
the camera unit comprises a camera housing that houses a camera, and
the camera unit comprises a first connector arm receiver configured to receive and securely hold the connector arm of the display device such that the display device faces a first direction.

2. The integrable modular lottery terminal of Claim 1, wherein the first connector arm receiver comprises an interior surface that defines a connector arm receiving slot sized and shaped to receive the connector arm of the display device.

3. The integrable modular lottery terminal of Claim 1, wherein the camera housing comprises a second multiple connector arm receiver configured to receive and securely hold the connector arm of the display device such that the display device faces a second direction that is opposite the first direction.

4. The integrable modular lottery terminal of Claim 1, wherein the camera housing comprises a second multiple connector arm receiver configured to receive and securely hold the connector arm of the display device such that the display device faces a second direction that is transverse to the first direction.

5. The integrable modular lottery terminal of Claim 4, wherein the camera housing comprises a third multiple connector arm receiver configured to receive and securely hold the connector arm of the display device such that the display device faces a third direction that is opposite the first direction.

6. The integrable modular lottery terminal of Claim 1, wherein the camera housing comprises multiple connector arm receivers facing in different directions such that the connector arm of the display device can be connected to the camera unit such that the display device faces one of the different directions.

7. The integrable modular lottery terminal of Claim 1, wherein the connector arm comprises a connector arm support including a connector arm support base vertically slidably connected to a rear wall of the display device housing, spaced-apart mounting members connected to the connector arm support base, and an insertion member pivotably supported by the mounting members.

8. The integrable modular lottery terminal of Claim 7, wherein the connector arm comprises a connection hand connected to the insertion member.

9. The integrable modular lottery terminal of Claim 8, wherein the connection hand comprises a connection palm and two connection fingers connected to and extending rearwardly from the connection palm, wherein the connection fingers define a central locking member receiving opening.

10. The integrable modular lottery terminal of Claim 1, wherein the first connector arm receiver comprises top, bottom, and side walls that define the connector arm receiver slot.

11. The integrable modular lottery terminal of Claim 10, wherein the first connector arm receiver comprises a locking base configured to receive part of a locking key configured to secure the connector arm to the locking base.

12. The integrable modular lottery terminal of Claim 1, wherein the first connector arm receiver extends inwardly from a first side wall of the camera unit, wherein the camera unit further comprises a second connector arm receiver extending inwardly from a second side wall of the camera unit, and a third connector arm receiver extending inwardly from a third side wall of the camera unit, each of the first, second, and third connector arm receivers configured to receive and securely hold the connector arm of the display device.
